# EUROPEAN PATENT APPLICATION

(11) **EP 4 694 494 A1**
(43) Date of publication of application: **11.02.2026**
(21) Application number: 23929517.3
(22) Date of filing: 31.03.2023
(51) Int. Cl.: H04W 72/25

(54) **COMMUNICATION METHOD AND APPARATUS FOR SIDELINK (SL) IN UNLICENSED SPECTRUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2023/085776
(87) International publication number: WO 2024/197934

(57) **Abstract**

Disclosed in the embodiments of the present disclosure are a communication method and apparatus for a sidelink (SL) in an unlicensed spectrum, which can be applied to systems such as the Internet of Vehicles, V2X and V2V. The method comprises: a first terminal receiving indication information which is sent by a second terminal, wherein the indication information is used for instructing the sharing of a channel occupancy time (COT); the first terminal determining packet state information of its own SL media access control (MAC) protocol data unit (PDU), and determining a listen before talk (LBT) type; and the first terminal executing LBT according to the LBT type. By means of implementing the embodiments of the present disclosure, an LBT type suitable for the current first terminal can be selected for LBT, so as to facilitate more effective channel access.

## Description

### TECHNICAL FIELD

The present disclosure relates to a field of communication technology, and specifically to a communication method and device for a sidelink (SL) in an unlicensed spectrum.

### BACKGROUND

In order to support direct communication between terminals, the direct communication (also known as Sidelink (SL) communication) has been introduced, and the interface between terminals is PC-5. According to the correspondence between the sending and receiving terminals, Sidelink supports three transmission methods, such as unicast, multicast, and broadcast.

For the Sidelink in the release R18, it supports working on unlicensed spectrum. Sidelink communication can utilize unlicensed spectrum for communication. Unlicensed spectrum is open and can be effectively utilized to improve performance and speed. This scenario can be called Sidelink-U (Sidelink-Unlicensed) scenario. Communication devices can communicate on unlicensed band resources obtained through resource contention.

Channel occupancy time (COT) sharing is a feature being discussed in the release R18, which allows the terminal performing type 1 LBT (listen before talk) to preempt COT sharing for use by other terminals. The terminal that initiates shared COT is called a COT initiating UE, and the terminal that uses shared COT is called a responding terminal or a responding UE. For example, when the responding terminal is the target receiving terminal of the COT initiating terminal, the responding terminal can share the COT.

However, how to ensure more effective channel access mechanisms for responding terminals in Sidelink-U scenarios has become an urgent problem to be solved.

### SUMMARY

Embodiments of the present disclosure provide a communication method and device for a sidelink (SL) in an unlicensed spectrum, which can be applied to the Internet of Vehicles, such as vehicle to everything (V2X) communication, long term evolution-vehicle (LTE-V) communication, vehicle to vehicle (V2V) communication, etc., or can be used in fields such as intelligent driving and intelligent connected vehicles. By determining packing state information of an SL MAC PDU of a first terminal, a listen before talk (LBT) type is determined, so that the LBT type that matches the packing state information of the SL MAC PDU is selected to perform LBT, which ensures that the first terminal in the Sidelink-U scenario can select a more efficient channel access mechanism for more efficient channel access.

In a first aspect, embodiments of the present disclosure provide a communication method for a sidelink (SL) in an unlicensed spectrum. The method is performed by a first terminal, and includes:
receiving indication information sent by a second terminal, wherein the indication information indicates a shared channel occupation time (COT);
determining packing state information of a SL media access control (MAC) protocol data unit (PDU) of the first terminal, and determining a listen before talk (LBT) type; and
performing LBT according to the LBT type.

In this technical solution, it can be ensured that the first terminal in the Sidelink-U scenario can select a more efficient channel access mechanism for more efficient channel access.

In a second aspect, embodiments of the present disclosure provide a channel access device for a sidelink (SL), which has the ability to implement some or all of the functions of the first terminal in the method described in the first aspect. For example, the device may have the functions of some or all of the embodiments in this disclosure, or may have the functions of implementing any of the embodiments in this disclosure separately. The functions can be implemented through hardware or by executing corresponding software through hardware. The hardware or software includes one or more units or modules corresponding to the above functions.

In an implementation, the structure of the device may include a processing module configured to support the device to perform the corresponding functions in the above method. The communication device may also include a storage module coupled with the processing module and configured to store the necessary computer programs and data for the device.

As an example, the processing module may be a processor, and the storage module may be a memory.

In an implementation, the processing module is configured to receive indication information sent by a second terminal, wherein the indication information indicates a shared channel occupation time (COT); the processing module is further configured to determine packing state information of a SL MAC PDU of the device, and determine a listen before talk (LBT) type; the processing module is further configured to perform LBT according to the LBT type.

In an implementation, the indication information is carried through sidelink control information (SCI), and the processing module is further configured to: determine a target address indicated by the SCI and/or a first identifier indicated by the indication information, and determine whether the device is a responding terminal of the shared COT according to the target address indicated by the SCI and/or the first identifier indicated by the indication information, wherein the first identifier identifies the responding terminal of the shared COT.

In a possible implementation, the processing module is specifically configured to: determine that the device completes packing of the SL MAC PDU, and the SL MAC PDU does not meet a condition for using the shared COT; and determine that the LBT type is a first type.

In a possible implementation, the responding terminal uses the shared COT to only send SL data to the second terminal, and the SL MAC PDU not meeting the condition for using the shared COT includes at least one of: a channel access priority class (CAPC) of the SL MAC PDU being greater than a CAPC indicated by the indication information; or a terminal receiving the SL MAC PDU being not the second terminal.

In a possible implementation, the responding terminal uses the shared COT to send SL data to the second terminal or another terminal, and the SL MAC PDU not meeting the condition for using the shared COT includes at least one of: a CAPC of the SL MAC PDUs being greater than a CAPC indicated by the indication information; or a terminal receiving the SL MAC PDU being not the second terminal or the another terminal.

In a possible implementation, the processing module is specifically configured to: determine that the device completes packing of the SL MAC PDU, and the SL MAC PDU meets a condition for using the shared COT; and determine that the LBT type is a second type.

In a possible implementation, the responding terminal uses the shared COT to only send SL data to the second terminal, and SL MAC PDU meeting the condition for using the shared COT includes: a CAPC of the SL MAC PDU being less than or equal to a CAPC indicated by the indication information; and a terminal receiving the SL MAC PDU being the second terminal.

In a possible implementation, the responding terminal uses the shared COT to send SL data to the second terminal or another terminal, and the SL MAC PDU meeting the condition for using the shared COT includes: a CAPC of the SL MAC PDU being less than or equal to a CAPC indicated by the indication information; and a terminal receiving the SL MAC PDU being the second terminal or the another terminal.

In an optional implementation, the indication information includes a second identifier, the second identifier identifies the another terminal, and the another terminal is a terminal other than the device and the second terminal.

In an implementation, the processing module is specifically configured to: determine that the device has not started packing of the SL MAC PDU; and determine that the device does not select to use the shared COT, and determine that the LBT type is the first type.

In an implementation, the processing module is specifically configured to: determine that the device has not started packing of the SL MAC PDU; perform logical channel prioritization (LCP); determine that an address of the second terminal and/or an address of another terminal meets a first condition; determine that the address of the second terminal or the address of the another terminal is the target address of the SL MAC PDU; continue to select a logical channel (LCH); multiplex the LCH selected into the SL MAC PDU, wherein the LCH selected meets a second condition and has an associated CAPC less than or equal to a CAPC indicated by the indication information; and determine that the LBT type is a second type.

In an implementation, the processing module is specifically configured to: determine that the device has not started packing of the SL MAC PDU; perform LCP; determine that neither an address of the second terminal nor an address of another terminal meets a first condition; fail to determine the address of the second terminal or the address of the another terminal as a target address of the SL MAC PDU, and determine the target address of the SL MAC PDU according to a third condition; continue to select a LCH meeting a second condition; multiplex selected LCH meeting the second condition into the SL MAC PDU; and determine that the LBT type is a first type.

In a possible implementation, the first condition includes at least one of:
condition a: if discontinuous reception on the sidelink (SL DRX) is applicable to the target address, sidelink grant is within an activation duration of the target address, and the sidelink grant is used to send the SL MAC PDU;
condition b: the target address has at least one LCH and/or medica access control-control element (MAC CE) that meets a first preset condition;
condition c: the target address has at least one LCH or MAC CE with a highest priority among all LCHs and MAC CEs that meet the first preset condition.

Optionally, the first preset condition includes at least one of:
having SL data to be transmitted;
if any logical channel has a token of a sidelink sending buffer (SBj), SBj>0;
if the sidelink grant is configuredGrantTypel, a parameter configuration sl-configuredGrantType1Allowed associated with the logical channel allows a media access control service data unit (MAC SDU) of the logical channel to be transmitted on the configuredGrantType1;
if a list of allowed configured grants (SL-allowedcg-list) is configured, the list includes configured grant identifiers associated with the sidelink grant;
if the sidelink grant has no associated physical sidelink feedback channel (PSFCH) resource, a hybrid automatic repeat request (HARQ) attribute of the logical channel is HARQ-disabled;
an associated CAPC being less than or equal to a CAPC indicated by the indication information.

In an implementation, the processing module is specifically configured to: determine that the device has not started packing of the SL MAC PDU; perform LCP; determine that an address of the second terminal and/or an address of another terminal meets a third condition; determine that the address of the second terminal or the address of the another terminal is the target address of the SL MAC PDU; determine that there is a LCH that meets a second condition and has an associated CAPC less than or equal to a CAPC indicated by the indication information; multiplex the LCH that meets the second condition and has the associated CAPC less than or equal to the CAPC indicated by the indication information into the SL MAC PDU; and determine that the LBT type is a second type.

In an implementation, the processing module is specifically configured to: determine that the device has not started packing of the SL MAC PDU; perform LCP; determine that an address of the second terminal and/or an address of another terminal meets a third condition; determine that the address of the second terminal or the address of the another terminal is the target address of the SL MAC PDU; determine that there are LCHs that meet a second condition and an associated CAPC of each LCH meeting the second condition is greater than an CAPC indicated by the indication information; multiplex the LCHs that meet the second condition into the SL MAC PDU; and determine that the LBT type is a first type.

In an implementation, the processing module is specifically configured to: determine that the device has not started packing of the SL MAC PDU; perform LCP; determine that neither an address of the second terminal nor an address of another terminal meets a third condition; fail to determine the address of the second terminal or the address of the another terminal as the target address of the SL MAC PDU, and determine a target address meeting the third condition as the target address of the SL MAC PDU; continue to select a LCH meeting a second condition, and multiplexing the LCH meeting the second condition into the SL MAC PDU; and determine that the LBT type is the first type.

In an optional implementation, the third condition includes at least one of:
condition A: if SL DRX is applicable to the target address, sidelink grant is within an activation duration of the target address, and the sidelink grant is used to send the SL MAC PDU;
condition B: the target address has at least one LCH and/or MAC CE that meets a second preset condition;
condition C: the target address has at least one LCH or MAC CE with a highest priority among all LCHs and MAC CEs that meet the second preset condition.

Optionally, the second preset condition includes at least one of:
having SL data to be transmitted;
if any logical channel has SBj, SBj>0;
if the sidelink grant is configuredGrantTypel, a parameter configuration sl-configuredGrantType1Allowed associated with the logical channel allows a MAC SDU of the logical channel to be transmitted on the configuredGrantType1;
if a list of allowed configured grants is configured, the list comprises configured grant identifiers associated with the sidelink grant;
if the sidelink grant has no associated PSFCH resource, a HARQ attribute of the logical channel is HARQ-disabled.

In an optional implementation, the LCH that meets the second condition includes selecting a logical channel from logical channels belonging to the target address that meets all of the following conditions:
1) having SL data available for transmission;
2) if a parameter sl-configuredGrantType1Allowed is configured, the parameter sl-configuredGrantType1Allowed is set to be true when the SL grant is configuredGrantType 1;
3) if a list of SL allowed configured grants (SL-allowedcg-list) is configured, the list needs to include configured grant indexes associated with the SL grant; and
4) sl-HARQ-FeedbackEnabled is set as follows:
   A) if PSFCH is configured for the SL grant associated with the SCI, and the terminal (UE) can receive the PSFCH:
      I) if the sl-HARQ-FeedbackEnabled corresponding to a logical channel with a highest priority that meets the condition above is enabled, the logical channel to be selected also needs to meet a condition that its sl-HARQ-FeedbackEnabled is enabled; or
      II) if the sl-HARQ-FeedbackEnabled corresponding to a logical channel with a highest priority that meets the condition above is disabled, the logical channel to be selected also needs to meet a condition that its sl-HARQ-FeedbackEnabled is disabled;
   B) if PSFCH is not configured for the SL grant associated with the SCI, and/or the UE cannot receive the PSFCH,
   the sl-HARQ-FeedbackEnabled is set to disabled.

In a third aspect, embodiments of the present disclosure provide a communication device. The communication device includes a processor. When the processor calls a computer program stored in a memory, the method described in the first aspect is implemented.

In a fourth aspect, embodiments of the present disclosure provide a communication device. The communication device includes a processor and a memory. The memory stores a computer program. The processor is configured to execute the computer program stored in the memory, to cause the communication device to implement the method described in the first aspect.

In a fifth aspect, embodiments of the present disclosure provide a communication device. The communication device includes a processor and an interface circuit. The interface circuit is configured to receive code instructions and transmit the code instructions to the processor. The processor is configured to run the code instructions, to cause the device to implement the method described in the first aspect.

In a sixth aspect, embodiments of the present disclosure provide a computer-readable storage medium for storing instructions for use by the network device, and when the instructions are executed, the terminal is caused to implement the method described in the first aspect.

In a seventh aspect, the present disclosure also provides a computer program product including a computer program that, when executed on a computer, causes the computer to perform the method described in the first aspect.

In an eighth aspect, the present disclosure provides a chip system including at least one processor and an interface for supporting the first terminal to implement the functions involved in the methods described in the first aspect, such as determining or processing at least one of the data and information involved in the above methods. In a possible design, the chip system further includes a memory for storing computer programs and data necessary for the first terminal. This chip system can be composed of chips or include chips and other discrete components.

In a ninth aspect, the present disclosure provides a computer program that, when executed on a computer, causes the computer to perform the method described in the first aspect.

### BRIEF DESCRIPTION OF THE DRAWINGS

In order to provide a clearer explanation of the technical solution in embodiments of the present disclosure or background technology, the accompanying drawings required for use in embodiments of the present disclosure or background technology will be described below.
Fig. 1 is a schematic diagram of architecture of a communication system provided in an embodiment of the present disclosure.
Fig. 2 is a schematic flowchart of a communication method for a SL in an unlicensed spectrum provided in an embodiment of the present disclosure.
Fig. 3 is a schematic flowchart of another communication method for a SL in an unlicensed spectrum provided in an embodiment of the present disclosure.
Fig. 4 is a schematic flowchart of another communication method for a SL in an unlicensed spectrum provided in an embodiment of the present disclosure.
Fig. 5 is a schematic flowchart of another communication method for a SL in an unlicensed spectrum provided in an embodiment of the present disclosure.
Fig. 6 is a schematic flowchart of another communication method for a SL in an unlicensed spectrum provided in an embodiment of the present disclosure.
Fig. 7 is a schematic flowchart of another communication method for a SL in an unlicensed spectrum provided in an embodiment of the present disclosure.
Fig. 8 is a schematic flowchart of another communication method for a SL in an unlicensed spectrum provided in an embodiment of the present disclosure.
Fig. 9 is a schematic flowchart of another communication method for a SL in an unlicensed spectrum provided in an embodiment of the present disclosure.
Fig. 10 is a schematic flowchart of another communication method for a SL in an unlicensed spectrum provided in an embodiment of the present disclosure.
Fig. 11 is a block diagram of a communication device for a SL in an unlicensed spectrum provided in an embodiment of the present disclosure.
Fig. 12 is a block diagram of a communication device provided in an embodiment of the present disclosure.
Fig. 13 is a block diagram of a chip provided in an embodiment of the present disclosure.

### DETAILED DESCRIPTION

The following provides a detailed description of embodiments of the present disclosure, examples of which are shown in the accompanying drawings, where the same or similar reference numerals throughout represent the same or similar elements or elements with the same or similar functions. The embodiments described below with reference to the accompanying drawings are exemplary and intended to explain the present disclosure, and should not be construed as limiting the present disclosure. In the description disclosed herein, unless otherwise specified, "/" means "or", for example, A/B can represent A or B; "and/or" in this article is only a description of the association relationship between related objects, indicating that there can be three types of relationships, for example, A and/or B can represent: the existence of A alone, the existence of A and B at the same time, and the existence of B alone.

The terms used in embodiments of the present disclosure are only for the purpose of describing specific embodiments and are not intended to limit the embodiments of the present disclosure. The singular forms of "a" and "the" used in embodiments of the present disclosure and the accompanying claims are also intended to include the majority form, unless the context clearly indicates otherwise.

It should be understood that although the terms first, second, third, etc. may be used to describe various information in embodiments of the present disclosure, these information should not be limited by the terms. These terms are only used to distinguish information of the same type from each other. For example, without departing from the scope of the embodiments of the present disclosure, the first information may also be referred to as the second information, and similarly, the second information may also be referred to as the first information. Depending on the context, the words 'if ' and 'when' used here can be interpreted as 'in a case' or 'upon' or 'in response to determining'.

For ease of understanding, the terms involved in this disclosure are first introduced.

### 1. COT initiating terminal

COT initiating terminal (COT initiating UE) is a terminal initiating a shared COT.

### 2. COT responding terminal

COT responding terminal (COT responding UE) is a terminal using the shared COT. For example, when the responding terminal is the target receiving terminal of the COT initiating terminal, the responding terminal can share the COT. The responding terminal being the target receiving terminal of the COT initiating terminal refers to that the target address indicated in the SCI where the initiating terminal initiates the shared COT is the address of the responding terminal, and/or the target terminal identifier indicated by the indication information in the SCI is the terminal identifier of the responding terminal. As an example, the responding terminal may be a responding UE. The responding terminal of the shared COT may also be referred to as the target terminal of the shared COT.

### 3. LBT type

The LBT type includes a first type (type 1) and a second type (type 2). The first type is a random backoff LBT mechanism with a fixed contention window or a random backoff LBT mechanism with a variable contention window. The implementation of the first type of LBT monitoring mechanism will be based on a contention window, where the duration of channel monitoring is determined by a random number, and a channel is considered to be accessed until the random number is equal to 0 and the channel is idle. The second type is the LBT mechanism without random backoff. The implementation of the second type of LBT monitoring mechanism will be based on a fixed period of monitoring channel, such as 25us, 16us, etc.

### 4. Sidelink logical channel priority (Sidelink LCP, also known as SL LCP)

The basic logic of the SL LCP is similar to that of the Uu LCP, but since the TX UE (transmitting terminal) may support sending data to multiple RX UEs (receiving terminals) on the Sidelink, it is necessary to first select the target address (destination) corresponding to the logical channel (or MAC CE) with the highest priority in the MAC CEs (Media Access Control-Control Elements) and logical channels that meet the preset condition (such as having data available, the type and index corresponding to the configuredgrant meeting the condition, the HARQ (Hybrid Automatic Repeat Request) attribute meeting the condition, etc.), that is, to confirm which object the sending end is. Afterwards, all logical channels belonging to the destination are further evaluated to determine if all conditions are met, and logical channels are selected for multiplex.

### The SL LCP process may include the following.

During the SL LCP process, the sending terminal needs to consider the following conditions when selecting the target address:
if the discontinuous reception on the sidelink (SL DRX) is applicable to the target address, the sidelink grant is within the activation duration of the target address, and the sidelink grant is used to send the SL MAC PDU; the sending terminal selects the target address corresponding to the MAC CE or logical channel with the highest priority among MAC CEs and logical channels that meet the preset conditions, as the final target address in the SL LCP process, which is used for the actual transmission of TB after the SL LCP process is completed. The preset conditions may include at least one of the following: having data to be transmitted; the value of the associated SBj (token of the sidelink sending buffer) is greater than 0 (SBj>0); the associated configured grant resource type matches the current resource type; the associated configured grant resource index matches the current resource; the associated HARQ attribute is HARQ-disabled if the current resource does not include the feedback resource.

The following provides a detailed description of the embodiments of the present disclosure, examples of which are shown in the accompanying drawings, where the same or similar reference numerals throughout indicate the same or similar elements. The embodiments described below with reference to the accompanying drawings are exemplary and intended to explain the present disclosure, and should not be construed as limiting the present disclosure.

In order to support direct communication between terminals, the direct communication (also known as Sidelink (SL) communication) has been introduced, and the interface between terminals is PC-5. According to the correspondence between the sending and receiving terminals, Sidelink supports three transmission methods, such as unicast, multicast, and broadcast. The sending terminal sends Sidelink Control Information (SCI) on the Physical Sidelink Control Channel (PSCCH) and sends the second stage SCI on the Physical Sidelink Shared Channel (PSSCH), which carries the resource location, source identification, and destination identification of the transmitted data. For HARQ (Hybrid Automatic Repeat reQuest) feedback enabled data packets, the receiving terminal provides HARQ-ACK (Hybrid Automatic Repeat Request Acknowledgement) feedback to the PSSCH on the Physical Sidelink Feedback Channel (PSFCH).

The multiplexing function of the sending MAC (Medium Access Control) layer loads data from multiple logical channels into a single transmission channel, that is, multiple MAC SDUs (MAC Service Data Units) are multiplexed into one MAC PDU (MAC Protocol Data Unit) and sent out through the physical layer channel. When multiple logical channels have data transmission and the total amount of data exceeds the current authorized transmission capacity, the problem of which logical channel should be prioritized for transmission arises, known as Logical Channel Prioritization (LCP). At present, the existing LCP process needs to follow the following rules when selecting the target address:
Condition A: If SL DRX is applicable to the target terminal/address, the sidelink grant is within the activation duration of the target terminal/address;
Condition B: The target terminal/address has at least one MAC CE or LCH with the highest priority among all first LCHs and/or first MAC CEs, wherein the first LCH and/or first MAC CE meets at least some or all of conditions 1) to 5);
wherein the conditions 1) to 5) are as follows:
Condition 1) there is SL data to be transmitted;
Condition 2) if any logical channel has SBj, SBj>0;
Condition 3) if the sidelink grant is configuredGrantType1, the parameter sl-configuredGrantType1Allowed associated with the logical channel allows the MAC SDU of the logical channel to be transmitted on configuredGrantType1;
Condition 4) if a list of allowed configured grants is configured, the list includes the configured grant identifiers associated with the sidelink grants;
Condition 5) if the sidelink grant has no associated PSFCH (Physical Sidelink Feedback Channel) resources, the HARQ attribute of the logical channel is HARQ-disabled.

Each logical channel has a priority for logical channel scheduling, which is configured by the network device. The network device configures the terminal (UE) in the connected state through a dedicated signaling and configures the UE in the idle state through broadcasting. The network device configures the priority for this logical channel based on the QoS (Quality of Service) of the data carried by the logical channel. When the terminal obtains the scheduling opportunity, that is, the resources for sidelink transmission data, the UE first selects the destination UE, and the UE corresponding to the Sidelink logical channel and/or SL MAC CE with the highest priority is selected as the destination UE.

There are two modes to allocate sending resources for Sidelink communication: one is through dynamic network scheduling (mode 1), and the other is through UE's autonomous selection from network configured or pre-configured resource pools (mode 2). Dynamic scheduling refers to the network dynamically allocating sending resources on the Sidelink to the UE based on cached data reporting from the UE, while autonomous selection refers to the UE randomly selecting sending resources from the network configured or pre-configured resource pools. The network can configure multiple resource pools for UE on a BWP (bandwidth part). The specific allocation mode used is configured by the network side through RRC (Radio Resource Control) signaling.

NR-U (also known as 5G NR-U, 5G NewRadio in Unlicensed Spectrum, License free band 5G NR, 5G air interface operating in unlicensed bands) is a project initiated by 3GPP (3rd Generation Partnership Project) in the release R16, providing necessary technology for operators to fully integrate unlicensed spectrum into 5G networks. NR-U supports uplink and downlink operations in unlicensed frequency bands. In NR-U, both downlink and uplink channel access rely on the listen before talk (LBT) feature. Wireless devices or base stations must first "sense" the communication channel and detect no communication before any transmission. The LBT type includes the first type (type 1) and the second type (type 2), and CAPC (channel access priority class) is a parameter related to LBT. Different CAPCs affect the priorities in channel competition. The smaller the CAPC value, the higher the priority. The terminal determines the CAPC of a MAC PDU according to the following criteria:
1) If the SL MAC PDU only contains the sidelink media access control-control element CE (SL MAC CE), the CAPC of the SL MAC PDU has the highest priority (with the lowest CAPC value);
2) If the SL MAC PDU contains the SCCH SDU (sidelink control channel service data unit), the CAPC of the SL MAC PDU has the highest priority (with the lowest CAPC value);
3) If the SL MAC PDU contains the SL MAC SDU, the CAPC of the SL MAC PDU has the lowest priority associated with the logical channel multiplexed to this TB (Transport Block) (CAPC is configured per logical channel), regardless of whether the SL MAC PDU contains the SL MAC CE.

It is worth noting that channel occupancy time (COT) sharing is a feature being discussed in the release R18, which allows the terminal performing type 1 LBT (listen before talk) to preempt COT sharing for use by other terminals. The terminal that initiates the shared COT is called the COT initiating terminal (COT initiating UE), and the terminal that uses the shared COT is called the responding terminal (responding UE). For example, when the responding terminal is the target receiving terminal of the COT initiating terminal, the responding terminal can share the COT.

For Sidelink in the release R18, it supports working on unlicensed spectrum. The Sidelink-U (Sidelink-Unlicensed) scenario refers to the use of unlicensed spectrum for communication on the sidelink. The unlicensed spectrum is open and can be effectively utilized to improve performance and speed. This scenario can be referred to as the Sidelink-U (Sidelink-Unlicensed) scenario. Communication devices can communicate on unlicensed frequency band resources obtained through resource competition.

However, how to ensure more effective channel access mechanisms for responding terminals in Sidelink-U scenarios has become an urgent problem to be solved.

For this, embodiments of the present disclosure provide a communication method and device for a sidelink (SL) in an unlicensed spectrum, which can determine the LBT type by determining the packing state information of the sidelink media access control protocol data unit (SL MAC PDU) of the first terminal, so that the LBT type that matches the packing state information of the SL MAC PDU can be selected to perform LBT, which ensures that the first terminal in Sidelink-U scenario can select a more effective channel access mechanism for more efficient channel access.

In order to better understand the communication method for a SL in an unlicensed spectrum disclosed in embodiments of the present disclosure, the following first describes the communication system to which embodiments of the present disclosure are applicable.

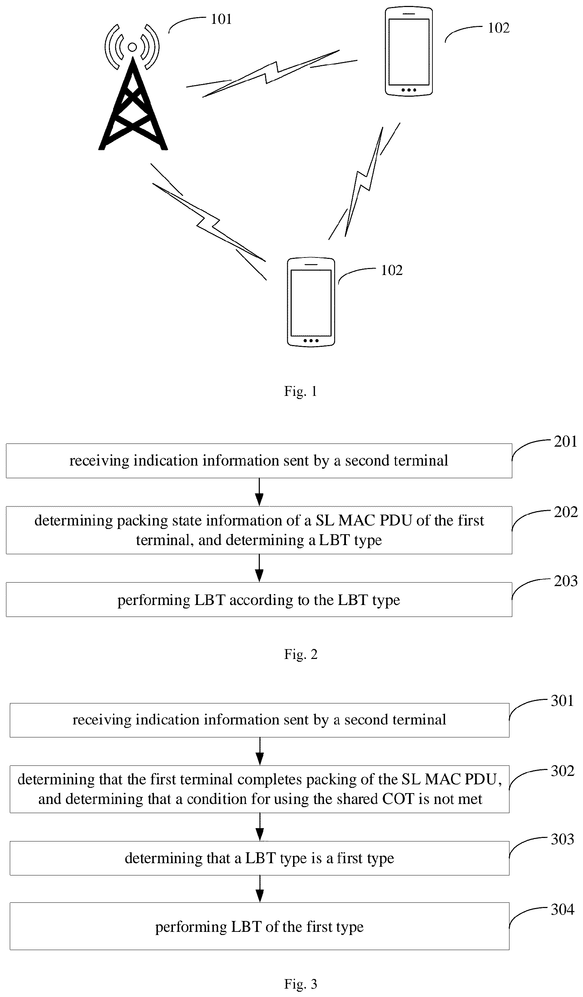

Please refer to Fig. 1, which is a schematic diagram of architecture of a communication system provided in an embodiment of the present disclosure. The communication system may include but is not limited to one network device and two terminals. The number and form of devices shown in Fig. 1 are for example only and do not constitute a limitation on the embodiments of the present disclosure. In applications, it may include two or more than two network devices, or three or more than three terminals. The communication system shown in Fig. 1 takes the example of including one network device 101 and two terminals (such as terminal 102 and terminal 103).

It should be noted that the technical solution disclosed in embodiments of the present disclosure can be applied to various communication systems, for example, Long Term Evolution (LTE) systems, 5th generation (5G) mobile communication systems, 5G new radio (NR) systems, or other future new mobile communication systems. It should be noted that the sidelink in embodiments of the disclosure can also be referred to as a side link or a direct link.

The network device 101 in embodiments of the present disclosure is an entity on the network side used for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (Wi-Fi) system. The specific technology and device form adopted by the network device is not limited in embodiments of the present disclosure. The network device provided in embodiments of the present disclosure may be composed of a central unit (CU) and distributed units (DUs), where the CU may also be referred to as a control unit. The CU-DU structure can be used to separate the base station, such as the protocol layers of the base station, with some protocol layer functions centrally controlled by the CU and the remaining or all protocol layer functions distributed in the DUs, which are centrally controlled by the CU.

The terminal 102 and the terminal 103 in embodiments of the present disclosure are entities on the user side used for receiving or transmitting signals, such as mobile phones. The terminal may also be referred to as terminal device, user equipment (UE), mobile station (MS), mobile terminal (MT), etc. The terminal may be communication enabled car, smart car, mobile phone, wearable device, tablet, computer with wireless transmission and reception capabilities, virtual reality (VR) terminal, augmented reality (AR) terminal, wireless terminal in industrial control, wireless terminal in self-driving, wireless terminal in remote medical surgery, wireless terminal in smart grid, wireless terminal in transportation safety, wireless terminal in smart city and wireless terminal in smart home, etc. The specific technology and device form adopted by the terminal is not limited in embodiments of the present disclosure.

Optionally, the first terminal mentioned in embodiments of the present disclosure may refer to terminal 102, and the second terminal may refer to terminal 103. As an example, the number of the first terminal and the number of the second terminal mentioned in embodiments of the present disclosure may be one or more.

It can be understood that the communication system described in embodiments of the present disclosure is for a clearer explanation of the technical solution provided in embodiments of the present disclosure, and does not constitute a limitation on the technical solution provided in embodiments of the present disclosure. Those skilled in the art know that with the evolution of system architecture and the emergence of new business scenarios, the technical solution provided in embodiments of the present disclosure is also applicable to similar technical problems.

The following provides a detailed introduction to the communication method and device for the sidelink (SL) in the unlicensed spectrum provided in this disclosure, in conjunction with the accompanying drawings.

Please refer to Fig. 2, which is a schematic flowchart of a communication method for a SL in an unlicensed spectrum provided in an embodiment of the present disclosure. It should be noted that the SL is transmitted on the unlicensed spectrum, and this method can be applied to Sidelink-U scenarios. The method can be performed by the first terminal, and optionally, the first terminal can operate in either mode 1 or mode 2 for resource allocation. As shown in Fig. 2, the method may include but is not limited to the following steps.

In step 201, indication information sent by a second terminal is received.

In embodiments of the present disclosure, the indication information indicates shared COT.

That is to say, the second terminal may be the initiating terminal of the shared COT, that is, the terminal initiating the shared COT, and the first terminal may be the responding terminal of the shared COT, and the responding terminal may also be referred to as the target terminal of the shared COT.

In an implementation, the indication information may be carried through SCI. In an embodiment of the present disclosure, the first terminal can receive the SCI carrying the indication information. In an optional implementation, the second terminal obtains COT and can share the obtained COT with the first terminal, and send the SCI to the first terminal, which is used to carry the indication information. The first terminal receives the SCI and can confirm that it has received the indication information.

It is worth noting that responding terminal of the shared COT can use this COT to send data. For this, the first terminal can determine whether it is the responding terminal of the shared COT. The responding terminal may refer to the target terminal of the shared COT. If the first terminal is the responding terminal, it can use the COT to send data. Optionally, the responding terminal of the shared COT may also be referred to as the target terminal of the shared COT, which is not limited in this disclosure.

As an example, the responding terminal of the shared COT can use the shared COT to send data to the initiating terminal of the shared COT, or the responding terminal can also use the shared COT to send data to terminals other than the initiating terminal of the shared COT. As another example, the responding terminal can only use the shared COT to send data to the initiating terminal that shares the COT. The initiating terminal of the shared COT may refer to the second terminal mentioned in this article. This data may include but is not limited to at least one of the following sidelink data: PSSCH, PSCCH, PSFCH, etc.

Optionally, in some embodiments of the present disclosure, the first terminal determines that it has received the indication information and may also determine whether the first terminal is the responding terminal (or target terminal) of the shared COT based on the target address indicated by the SCI carrying the indication information and/or a first identifier indicated by the indication information. The first identifier identifies the responding terminal of the shared COT. The SCI may be the SCI sent by the initiating terminal of the shared COT (i.e. the second terminal) when sharing the COT, and the SCI can carry the indication information. In this way, when the first terminal receives the SCI, it can determine whether the first terminal is the responding terminal (or target terminal) of the shared COT based on the target address indicated by the SCI and/or the first identifier indicated by the indication information.

In a possible implementation, the first terminal may determine the target address indicated by the SCI and/or the first identifier indicated by the indication information. The first terminal determines whether it is the responding terminal of the shared COT based on the target address indicated by the SCI and/or the first identifier indicated by the indication information. For example, in an implementation, the first terminal can receive the SCI sent by the second terminal, wherein the SCI is used to carry the indication information, and the indication information can indicate the first identifier, etc. The first terminal stores its own address and terminal identifier in advance, or can obtain its own address and terminal identifier as needed. When receiving the SCI, the first terminal can determine the target address indicated by the SCI and/or the first identifier indicated by the indication information. For example, the first terminal can compare the received target address and/or first identifier with its own address and/or terminal identifier. When they match, the first terminal determines that the first terminal is the responding terminal of the shared COT based on the target address indicated by the SCI and/or the first identifier indicated by the indication information.

In an implementation, when the target address indicated by the SCI is consistent with the address of the first terminal, the first terminal determines itself as the responding terminal of the shared COT.

In some implementations, when the first identifier indicated by the indication information is consistent with the terminal identifier of the first terminal, the first terminal determines itself as the responding terminal of the shared COT.

In some implementations, when the target address indicated by the SCI and the first identifier indicated by the indication information are consistent with the corresponding address and terminal identifier of the first terminal, the first terminal determines itself as the responding terminal of the shared COT.

It should be understood that the meaning of "indicated by the SCI" can be understood as being directly indicated by SCI, or as being indicated by specific information carried by the SCI, such as indicated by the indication information, which is not limited in the present disclosure.

In step 202, packing state information of a SL MAC PDU of the first terminal is determined, and a LBT type is determined.

In an embodiment of the present disclosure, when the first terminal determines itself as the responding terminal of the shared COT and/or receives the indication information, it needs to determine the packing state information of the SL MAC PDU of the first terminal, for example, it needs to determine whether the packing of the SL MAC PDU has been completed or not yet started. That is to say, in the case of determining that the first terminal is the responding terminal of the shared COT and/or receiving the indication information, the first terminal needs to determine whether it has completed the packing of the SL MAC PDU or has not started the packing of the SL MAC PDU before determining itself as the responding terminal of the shared COT and/or receiving the indication information. The first terminal determines the corresponding LBT type based on the packing state information of the SL MAC PDU, so that the first terminal can use the corresponding LBT type for LBT.

In an implementation, when determining that the first terminal is the responding terminal of the shared COT and/or receives the indication information, if the first terminal determines that it has completed the packing of the SL MAC PDU before being the responding terminal of the shared COT and/or receiving the indication information, it indicates that the first terminal has selected the target address and completed the packing of SL MAC PDU using the "existing LCP process" described earlier in this article. In this case, the first terminal can determine whether the already packed SL MAC PDU meets the condition for using the shared COT, and determine different LBT types based on different results. For example, if the first terminal determines that the already packed SL MAC PDU meets the condition for using the shared COT, it determines that the LBT type is the second type, so that the first terminal can perform LBT of the second type, enabling the terminal to quickly complete channel access. For example, if the first terminal determines that the already packed SL MAC PDU does not meet the condition for using the shared COT, it determines the LBT type as the first type, so that the first terminal can perform the first type of LBT, enabling the first terminal to complete channel access.

In an implementation, when determining that the first terminal is the responding terminal of the shared COT and/or receives the indication information, if the first terminal determines that it has not started packing of the SL MAC PDU before being the responding terminal of the shared COT and/or receiving the indication information, the first terminal can enhance LCP to meet the condition for using the shared COT and determine the corresponding LBT type, so that the first terminal can perform LBT of the corresponding LBT type for more efficient channel access.

In step 203, LBT is performed according to the LBT type.

In embodiments of the present disclosure, when the first terminal determines the LBT type, it can perform the LBT of that LBT type. For example, if the first terminal determines that the LBT type is the first type, then the first terminal performs the LBT of the first type. For another example, if the first terminal determines that the LBT type is the second type, then the first terminal performs the LBT of the second type. The first type is a random backoff LBT mechanism with a fixed contention window or a random backoff LBT mechanism with a variable contention window. The implementation of LBT monitoring mechanism of the first type will be based on a contention window, where the duration of channel monitoring is determined by a random number, and until the random number is equal to 0 and the channel is idle, it is considered a channel access. The second type is the LBT mechanism without random backoff. The implementation of the second type of LBT monitoring mechanism will be based on a fixed period of monitoring channel, such as 25us, 16us, etc.

By implementing this embodiment of the present disclosure, the first terminal can determine the packing state information of its own SL MAC PDU, and then determine the LBT type, so that the LBT type that matches the packing state information of the SL MAC PDU can be selected to perform LBT, ensuring that the first terminal can select a more efficient channel access mechanism for more efficient channel access.

It should be noted that, in the case of determining that the first terminal is the responding terminal of the shared COT and/or receives the indication information, if the first terminal determines that it has completed the packing of the SL MAC PDU before being the responding terminal of the shared COT and/or receiving the indication information, it indicates that the first terminal uses the "existing LCP process" mentioned earlier in this article to select the target address and complete the packing of the SL MAC PDU. In this case, the first terminal can determine whether the already packed SL MAC PDU meets the condition for using the shared COT and determine different LBT types based on different results. Please refer to Fig. 3, which is a schematic flowchart of another communication method for a SL in an unlicensed spectrum provided in an embodiment of the present disclosure. It should be noted that the SL is transmitted on an unlicensed spectrum, and this method can be applied to Sidelink-U scenarios. The method can be performed by the first terminal, and optionally, the first terminal can operate in either mode 1 or mode 2 for resource allocation. As shown in Fig. 3, the method may include but is not limited to the following steps.

In step 301, indication information sent by a second terminal is received.

In an embodiment of the present disclosure, the implementation of step 301 can be implemented using any of the above embodiments, which is not limited or repeated here.

In step 302, it is determined that the first terminal completes packing of a SL MAC PDU, and a condition for using a shared COT is not met.

Optionally, the first terminal determines that it is the responding terminal of the shared COT and/or receives the indication information, and determines whether the LCP process has been performed. If the first terminal determines that the LCP process has been completed, it can be determined that the first terminal has completed the packing of the SL MAC PDU. If the first terminal has completed the packing of the SL MAC PDU before determining that it is the responding terminal of the shared COT and/or receiving the indication information, it can determine whether the packed SL MAC PDU meets the condition for using the shared COT. For example, if the first terminal determines that the packed SL MAC PDU does not meet the condition for using the shared COT, step 303 can be executed, which means that the LBT type can be determined as the first type, that is, the first terminal can perform the LBT of the first type.

It should be noted that the first terminal can use the shared COT to send data to the initiating terminal (i.e. the second terminal in this article) that shares the COT, or the first terminal can also use the shared COT to send data to the second terminal or another terminal (a terminal other than the first terminal and the second terminal). In an implementation, the responding terminal (i.e. the first terminal in this article) can only send SL data to the second terminal using the shared COT, and determining that the condition for using the shared COT is not met (i.e. the SL MAC PDU does not meet the condition for using the shared COT) may include: the CAPC of the SL MAC PDU being greater than the CAPC indicated by the indication information; and/or the terminal receiving the SL MAC PDU being not the second terminal. The terminal receiving the SL MAC PDU refers to the terminal corresponding to the target address of the SL MAC PDU, which is about to receive the SL MAC PDU.

That is to say, if the first terminal has completed the packing of the SL MAC PDU before determining that it is the responding terminal of the shared COT and/or receiving the indication information, and the packed SL MAC PDU does not meet the condition for using the shared COT, then the LBT type can be determined as the first type, which means that the first terminal can perform LBT of the first type. As an example, if the service type associated with the SL MAC PDU is unicast, then the target address of the SL MAC PDU is not the address of the second terminal (such as layer 2 address); alternatively, if the service type associated with the SL MAC PDU is multicast, the target address of the SL MAC PDU is not the address associated with the multicast service received by the second terminal; alternatively, if the service type associated with the SL MAC PDU is broadcast, then the target address of the SL MAC PDU is not the address associated with the broadcast service received by the second terminal.

In another implementation, in the case where the responding terminal of the shared COT (i.e. the first terminal in this article) can use the shared COT to send SL data to the second terminal or another terminal, determining that the condition for using the shared COT is not met (i.e. the SL MAC PDU does not meet the condition for using the shared COT) includes: the CAPC of the SL MAC PDU being greater than the CAPC indicated by the indication information; and/or the terminal receiving the SL MAC PDU being not one of the second terminal and the another terminal. Optionally, the indication information includes a second identifier, the second identifier identifies the another terminal, which is a terminal other than the first and second terminals. Optionally, the address of the another terminal may be the target address of the SL MAC PDU sent using the shared COT, that is, the another terminal may be the target receiving terminal of the SL MAC PDU sent using the shared COT. As an example, if the indication information carries the second identifier, it indicates that the first terminal can use the shared COT to send SL data to the second terminal or the terminal indicated by the second identifier; if the indication information does not carry the second identifier or carries the second terminal identifier, it indicates that the first terminal can use the shared COT to send SL data to the second terminal.

For example, in the case where the responding terminal of the shared COT (i.e. the first terminal in this article) can use the shared COT to send SL data to the second terminal or another terminal, the indication information carries the second identifier, and determining that the condition for using the shared COT is not met (i.e. the SL MAC PDU does not meet the condition for using the shared COT) includes: the CAPC of the SL MAC PDU being greater than the CAPC indicated by the indication information; and/or the terminal receiving the SL MAC PDU being not one of the second terminal and the another terminal. For another example, in the case where the responding terminal of the shared COT (i.e. the first terminal in this article) can use the shared COT to send SL data to the second terminal or another terminal, the indication information does not carry the second identifier or carries the second terminal identifier, and determining that the condition for using the shared COT is not met (i.e. the SL MAC PDU does not meet the condition for using the shared COT) includes: the CAPC of the SL MAC PDU being greater than the CAPC indicated by the indication information; and/or the terminal receiving the SL MAC PDU being not the second terminal.

In step 303, a LBT type is determined as a first type.

In step 304, LBT of the first type is performed.

In an embodiment of the present disclosure, if the first terminal determines that it has completed the packing of the SL MAC PDU before being the responding terminal of the shared COT and/or receiving the indication information, and the already packed SL MAC PDU does not meet the condition for using the shared COT, the first terminal can perform the first type of LBT to ensure that the first terminal can select a more efficient channel access mechanism for more efficient channel access.

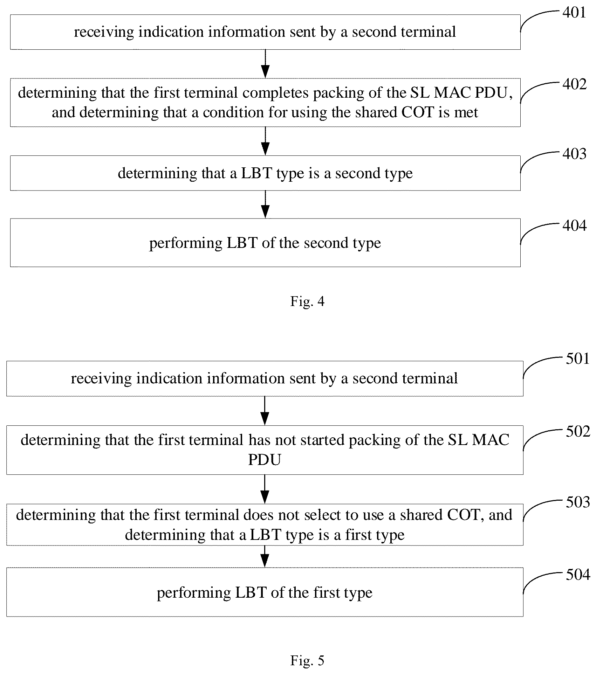

Please refer to Fig. 4, which is a schematic flowchart of another communication method for a SL in an unlicensed spectrum provided in an embodiment of the present disclosure. It should be noted that the SL is transmitted on an unlicensed spectrum, and this method can be applied to Sidelink-U scenarios. The method can be performed by the first terminal, and optionally, the first terminal can operate in either mode 1 or mode 2 for resource allocation. As shown in Fig. 4, the method may include but is not limited to the following steps.

Instep 401, indication information sent by a second terminal is received.

In this embodiment of the present disclosure, the implementation of step 401 can be implemented using any of the above embodiments, which is not limited or repeated here.

In step 402, it is determined that the first terminal completes packing of a SL MAC PDU, and a condition for using a shared COT is not met.

Optionally, if the first terminal determines that it has completed the packing of the SL MAC PDU before being the responding terminal of the shared COT and/or receiving the indication information, it can determine whether the packed SL MAC PDU meets the condition for using the shared COT. For example, if the first terminal determines that the packed SL MAC PDU meets the condition for using the shared COT, step 403 can be executed, which means that the LBT type can be determined as the second type, that is, the first terminal can perform the second type of LBT.

It should be noted that the first terminal can use the shared COT to send data to the initiating terminal (i.e. the second terminal in this article) that shares the COT, or the first terminal can also use the shared COT to send data to the second terminal or another terminal (a terminal other than the first and second terminals). In an implementation, when the responding terminal of the shared COT can only send SL data to the second terminal using the shared COT, determining that the condition for using the shared COT is met (i.e., the SL MAC PDU meets the condition for using the shared COT) includes: the CAPC of the SL MAC PDU being less than or equal to the CAPC indicated by the indication information; and the terminal receiving the SL MAC PDU is the second terminal.

That is to say, if the first terminal determines that it has completed the packing of the SL MAC PDU before being the responding terminal of the shared COT and/or receiving the indication information, and the packed SL MAC PDU meets the condition for using the shared COT, then the LBT type can be determined as the second type, which means that the first terminal can perform the second type of LBT. As an example, if the service type associated with the SL MAC PDU is unicast, then the target address of the SL MAC PDU is the address of the second terminal (such as layer 2 address); alternatively, if the service type associated with the SL MAC PDU is multicast, the target address of the SL MAC PDU is the address associated with the multicast service received by the second terminal; alternatively, if the service type associated with the SL MAC PDU is broadcast, the target address of the SL MAC PDU is the address associated with the broadcast service received by the second terminal.

In another implementation, in the case where the responding terminal of the shared COT can use the shared COT to send SL data to the second terminal or another terminal, determining that the condition for using the shared COT is met (i.e., the SL MAC PDU meets the condition for using the shared COT) includes: the CAPC of the SL MAC PDU being less than or equal to the CAPC indicated by the indication information; and the terminal receiving the SL MAC PDU is either the second terminal or the another terminal. Optionally, the indication information includes a second identifier, the second identifier identifies the another terminal, and the another terminal is a terminal other than the first terminal and the second terminal. Optionally, the address of the another terminal may be the target address of the SL MAC PDU sent using the shared COT, which means that the another terminal may be the target receiving terminal of the SL MAC PDU sent using the shared COT. As an example, if the indication information carries the second identifier, it indicates that the first terminal can use shared COT to send SL data to the second terminal or the terminal indicated by the second identifier; if the indication information does not carry the second identifier or carries the second terminal identifier, it indicates that the first terminal can use the shared COT to send SL data to the second terminal.

For example, in the case where the responding terminal of the shared COT can use the shared COT to send SL data to the second terminal or another terminal, the indication information carries the second identifier, and determining that the conditions for using the shared COT is met (i.e., the SL MAC PDU meets the condition for using the shared COT) includes: the CAPC of the SL MAC PDU being less than or equal to the CAPC indicated by the indication information; and the terminal receiving the SL MAC PDU is either the second terminal or the another terminal. For another example, in the case where the responding terminal of the shared COT can use the shared COT to send SL data to the second terminal or another terminal, the indication information does not carry the second identifier or carries the second terminal identifier, and determining that the condition for using the shared COT is met (i.e. the SL MAC PDU meets the condition for using the shared COT) includes: the CAPC of the SL MAC PDU being less than or equal to the CAPC indicated by the indication information; and the terminal receiving the SL MAC PDU being the second terminal.

In step 403, the LBT type is determined as a second type.

In step 404, LBT of the second type is performed.

In an embodiment of the present disclosure, if the first terminal determines that it has completed the packing of the SL MAC PDU before being the responding terminal of the shared COT and/or receiving the indication information, and the already packed SL MAC PDU meets the condition for using the shared COT, the first terminal can perform the second type of LBT to ensure that the first terminal can select a more efficient channel access mechanism for more efficient channel access.

It should be noted that, in the case where the first terminal determines that it is the responding terminal of the shared COT and/or receives the indication information, if the first terminal determines that it has not started the packing of the SL MAC PDU before being the responding terminal of the shared COT and/or receiving the indication information, it can determine whether to select to use the shared COT and match the corresponding LBT type, so that the first terminal can perform the LBT of the corresponding LBT type for more efficient channel access. Please refer to Fig. 5, which is a schematic flowchart of another communication method for a SL in an unlicensed spectrum provided in an embodiment of the present disclosure. It should be noted that the SL is transmitted on an unlicensed spectrum, and this method can be applied to Sidelink-U scenarios. The method can be performed by the first terminal, and optionally, the first terminal can operate in either mode 1 or mode 2 for resource allocation. As shown in Fig. 5, the method may include but is not limited to the following steps.

In step 501, indication information sent by a second terminal is received.

In an embodiment of the present disclosure, the implementation of step 501 can be implemented using any of the above embodiments, which is not limited or repeated here.

In step 502, it is determined that the first terminal has not started packing of a SL MAC PDU.

Optionally, the first terminal receives the indication message and determines that it has not yet started the packing of the SL MAC PDU before being the responding terminal of the shared COT and/or receiving the indication information. For example, the first terminal receives the indication information and determines whether the SL MAC PDU packing operation has been performed, that is, determines whether the LCP process has been performed. If the LCP process has not been performed yet, it is determined that the first terminal has not started the packing of the SL MAC PDU.

In step 503, it is determined that the first terminal does not select to use a shared COT, and it is determined that a LBT type is a first type.

Optionally, the first terminal selecting not to use the shared COT can be understood as the first terminal not using the shared COT to send SL data, and other resources can be selected to send SL data. The first terminal can determine that the LBT type is the first type, that is, the first terminal can perform LBT of the first type on the selected other resources.

In step 504, LBT of the first type is performed.

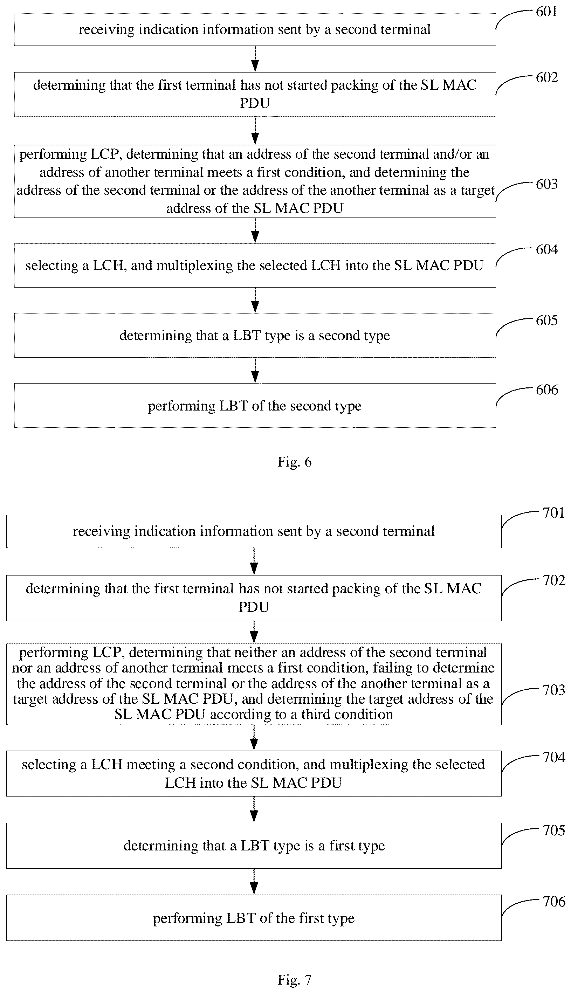

It should be noted that, upon receiving the indication information, if the first terminal determines that it has not started packing of the SL MAC PDU before being the responding terminal of the shared COT and/or receiving the indication information, the first terminal can enhance LCP to meet the condition for using the shared COT and determine the corresponding matched LBT type, so that the first terminal can perform LBT of the corresponding LBT type for more efficient channel access. Optionally, the first terminal can consider whether there is an LCH/MAC CE that belongs to the target address and meets the CAPC condition when selecting the target address. Please refer to Fig. 6, which is a schematic flowchart of another communication method for an SL in an unlicensed spectrum provided in an embodiment of the present disclosure. It should be noted that the SL is transmitted on an unlicensed spectrum, and this method can be applied to Sidelink-U scenarios. The method can be performed by the first terminal, and optionally, the first terminal can operate in either mode 1 or mode 2 for resource allocation. As shown in Fig. 6, the method may include but is not limited to the following steps.

In step 601, indication information sent by a second terminal is received.

In an embodiment of the present disclosure, the implementation of step 601 can be implemented using any of the above embodiments, which is not limited or repeated here.

In step 602, it is determined that the first terminal has not yet started packing of a SL MAC PDU.

In an embodiment of the present disclosure, the implementation of step 602 can be implemented using any of the above embodiments, which is not limited or repeated here.

In step 603, logical channel prioritization (LCP) is performed, to determine that an address of the second terminal and/or an address of the another terminal meets a first condition, and determine the address of the second terminal or the address of the another terminal as a target address of the SL MAC PDU.

Optionally, the first terminal performs the LCP process, during which it determines that the address of the second terminal and/or the address of the another terminal meets the first condition, and uses the address of the second terminal or the address of the another terminal as the target address of the SL MAC PDU.

In an embodiment of the present disclosure, the first condition may include at least one of the following conditions:
condition a: if discontinuous reception on the sidelink (SL DRX) is applicable to the target address, sidelink grant is within an activation duration of the target address, and the sidelink grant is used to send the SL MAC PDU;
condition b: the target address has at least one LCH and/or medica access control-control element (MAC CE) that meets a first preset condition;
condition c: the target address has at least one LCH or MAC CE with a highest priority among all LCHs and MAC CEs that meet the first preset condition.

Optionally, in an implementation, the first preset condition includes at least one of:
having SL data to be transmitted;
if any logical channel has a token of a sidelink sending buffer (SBj), SBj>0;
if the sidelink grant is configuredGrantTypel, a parameter configuration sl-configuredGrantType1Allowed associated with the logical channel allows a media access control service data unit (MAC SDU) of the logical channel to be transmitted on the configuredGrantType1;
if a list of allowed configured grants is configured, the list includes configured grant identifiers associated with the sidelink grant;
if the sidelink grant has no associated physical sidelink feedback channel (PSFCH) resource, a hybrid automatic repeat request (HARQ) attribute of the logical channel is HARQ-disabled;
an associated CAPC being less than or equal to a CAPC indicated by the indication information.

Optionally, in an embodiment of the present disclosure, during the LCP process, the first terminal can determine whether the address of the second terminal and/or the address of the another terminal meets the first condition, in order to serve as the target address for the SL MAC PDU. As an example, the service type associated with the SL MAC PDU is unicast, and the first terminal can determine whether the layer 2 address of the second terminal and/or the layer 2 address of the another terminal can be used as the target address of the SL MAC PDU based on the first condition mentioned above; alternatively, the service type associated with the SL MAC PDU is multicast, and the first terminal can determine whether the layer 2 address associated with the multicast service received by the second terminal and/or the layer 2 address associated with the multicast service received by the another terminal can be used as the target address of the SL MAC PDU based on the first condition mentioned above; alternatively, the service type associated with the SL MAC PDU is broadcast, and the first terminal can determine whether the layer 2 address associated with the broadcast service received by the second terminal and/or the layer 2 address associated with the broadcast service received by the another terminal can be used as the target address of the SL MAC PDU based on the first condition mentioned above. If the first terminal determines that the address of the second terminal and/or the address of the another terminal meets the first condition and can be used as the target address of the SL MAC PDU, the first terminal can use the address of the second terminal or the address of the another terminal as the target address of the SL MAC PDU.

In a possible implementation, if the first terminal determines that the address of the second terminal and the address of the another terminal meet the first condition, the first terminal can use the address of the second terminal as the target address of the SL MAC PDU. In another possible implementation, if the first terminal determines that the address of the second terminal and the address of the another terminal meet the first condition, the first terminal can use the address of the another terminal as the target address of the SL MAC PDU. In another possible implementation, if the first terminal determines that the address of the second terminal and the address of the another terminal meet the first condition, the first terminal selects one of the address of the second terminal and the address of the another terminal as the target address of the SL MAC PDU based on implementation of the first terminal.

In step 604, a logical channel (LCH) is selected, and the selected LCH is multiplexed into the SL MAC PDU.

Optionally, after the first terminal uses the address of the second terminal or the address of the another terminal as the target address of the SL MAC PDU, it continues to select the logical channel (LCH) and multiplex the selected LCH into the SL MAC PDU.

In an embodiment of the present disclosure, the selected LCH meets the second condition and the associated CAPC is less than or equal to the CAPC indicated by the indication information.

In an embodiment of the present disclosure, the LCH that meets the second condition includes selecting a logical channel from logical channels belonging to the target address that meets all of the following conditions:
1) having SL data available for transmission;
2) if a parameter sl-configuredGrantType1Allowed is configured, the parameter sl-configuredGrantType1 Allowed is set to be true when the SL grant is configuredGrantType 1;
3) if a list of SL allowed configured grants (SL-allowedcg-list) is configured, the SL-allowedcg-list needs to include configured grant indexes associated with the SL grant; and
4) sl-HARQ-FeedbackEnabled is set as follows:
   41) if PSFCH is configured for the SL grant associated with the SCI, and the terminal (UE) can receive the PSFCH:
      411) if the sl-HARQ-FeedbackEnabled corresponding to a logical channel with a highest priority that meets the condition above is enabled, the logical channel to be selected also needs to meet a condition that its sl-HARQ-FeedbackEnabled is enabled; or
      412) if the sl-HARQ-FeedbackEnabled corresponding to a logical channel with a highest priority that meets the condition above is disabled, the logical channel to be selected also needs to meet a condition that its sl-HARQ-FeedbackEnabled is disabled;
   42) if PSFCH is not configured for the SL grant associated with the SCI, and/or the UE cannot receive the PSFCH,
   421)the sl-HARQ-FeedbackEnabled is set to disabled.

That is to say, if the first terminal determines that the address of the second terminal and/or the address of the another terminal can be used as the target address of the SL MAC PDU, the first terminal continues to select the LCH that meets the second condition and has the associated CAPC less than or equal to the CAPC indicated by the indication information, and multiplexes the selected LCH into the SL MAC PDU.

In step 605, a LBT type is determined as a second type.

In step 606, LBT of the second type is performed.

In an embodiment of the present disclosure, in the case of receiving the indication information, the first terminal determines that it has not started packing of the SL MAC PDU before being the responding terminal of the shared COT and/or receiving indication information. In this case, the first terminal can consider whether there are LCHs/MAC CEs that belong to the target address and meet the CAPC condition based on the existing conditions for selecting the target address in LCP. After selecting the target address, the first terminal can continue to select the LCH that meets the second condition and is associated with CAPC less than or equal to the CAPC indicated by the indication information, and multiplex it into the SL MAC PDU. The first terminal performs the second type of LBT, which can make the first terminal complete channel access more quickly and effectively and improve channel access efficiency.

Please refer to Fig. 7, which is a schematic flowchart of another communication method for a SL in an unlicensed spectrum provided in an embodiment of the present disclosure. It should be noted that the SL is transmitted on an unlicensed spectrum, and this method can be applied to Sidelink-U scenarios. The method can be performed by the first terminal, and optionally, the first terminal can operate in either mode 1 or mode 2 for resource allocation. As shown in Fig. 7, the method may include but is not limited to the following steps.

In step 701, indication information sent by a second terminal is received.

In an embodiment of the present disclosure, the implementation of step 701 can be implemented using any of the above embodiments, which is not limited or repeated here.

In step 702, it is determined that the first terminal has not yet started packing of a SL MAC PDU.

In an embodiment of the present disclosure, the implementation of step 702 can be implemented using any of the above embodiments, which is not limited or repeated here.

In step 703, LCP is performed, to determine that neither an address of the second terminal nor an address of the another terminal meets a first condition, failing to determine the address of the second terminal or the address of the another terminal as a target address of the SL MAC PDU, and determine the target address of the SL MAC PDU according to a third condition.

Optionally, the first terminal executes the LCP process and determines during the LCP process that neither the address of the second terminal nor the address of the another terminal meets the first condition, failing to use the address of the second terminal or the address of the another terminal as the target address of the SL MAC PDU, and determines the target address of the SL MAC PDU based on the third condition.

In an embodiment of the present disclosure, the third condition includes at least one of the following conditions:
condition A: if SL DRX is applicable to the target address, sidelink grant is within an activation duration of the target address, and the sidelink grant is used to send the SL MAC PDU;
condition B: the target address has at least one LCH and/or MAC CE that meets a second preset condition;
condition C: the target address has at least one LCH or MAC CE with a highest priority among all LCHs and MAC CEs that meet the second preset condition.

Optionally, in an implementation, the second preset condition includes at least one of:
having SL data to be transmitted;
if any logical channel has SBj, SBj>0;
if the sidelink grant is configuredGrantTypel, a parameter configuration sl-configuredGrantType1Allowed associated with the logical channel allows a MAC SDU of the logical channel to be transmitted on the configuredGrantType1;
if a list of allowed configured grants is configured, the list comprises configured grant identifiers associated with the sidelink grant;
if the sidelink grant has no associated PSFCH resource, a HARQ attribute of the logical channel is HARQ-disabled.

Optionally, in an embodiment of the present disclosure, during the LCP process, it can be determined whether the address of the second terminal and/or the address of the another terminal can be used as the target address of the SL MAC PDU based on the first condition mentioned above. If the first terminal determines that neither the address of the second terminal nor the address of the another terminal meets the first condition and fails to use the address of the second terminal or the address of the another terminal as the destination address of the SL MAC PDU, the target address of the SL MAC PDU can be determined based on the third condition mentioned above.

In a possible implementation, if the first terminal determines that neither the address of the second terminal nor the address of the another terminal meets the first condition, and the reason why the first terminal determines that neither the address of the second terminal nor the address of the another terminal can be used as the target address of the SL MAC PDU is not meeting any one or more of conditions 1) to 5) in the first condition, then the first terminal can determine the target address of the SL MAC PDU based on the third condition.

In step 704, a LCH meeting a second condition is selected, and multiplexed into the SL MAC PDU.

Optionally, after the first terminal determines the target address of the SL MAC PDU based on the third condition, it continues to select the LCH that meets the second condition and multiplex it into the SL MAC PDU.

For the relevant description of the second condition in this embodiment of the present disclosure reference can be made to the description of the second condition in step 604 above, which is not limited in this disclosure and will not be repeated here.

In step 705, a LBT type is determined as a first type.

In step 706, LBT of the first type is performed.

In a possible implementation, if the first terminal determines that neither the address of the second terminal nor the address of the another terminal meets the first condition, and the reason why the first terminal determines that neither the address of the second terminal nor the address of the another terminal can be used as the target address of the SL MAC PDU is not meeting "the associated CAPC is less than or equal to the CAPC indicated by the indication information" in the first condition, but the other conditions in the first condition are met, then the first terminal can still use the address of the second terminal or the address of the another terminals as the target address of the SL MAC PDU, and continue to select the LCH that meets the second condition and multiplex it into the SL MAC PDU, and perform the first type of LBT.

Optionally, in some embodiments of the present disclosure, if the first terminal determines that neither the address of the second terminal nor the address of the another terminal meets the first condition, the first terminal may determine whether there is another target terminal that meets the first condition. If so, the address of the another target terminal is determined as the target addresses of the SL MAC PDU, and then the LCH that meets the second condition and is associated with a CAPC less than or equal to the CAPC indicated by the indication information is further selected and multiplexed into the SL MAC PDU, and the LBT type is determined to be the first type, and the first terminal performs the LBT of the first type.

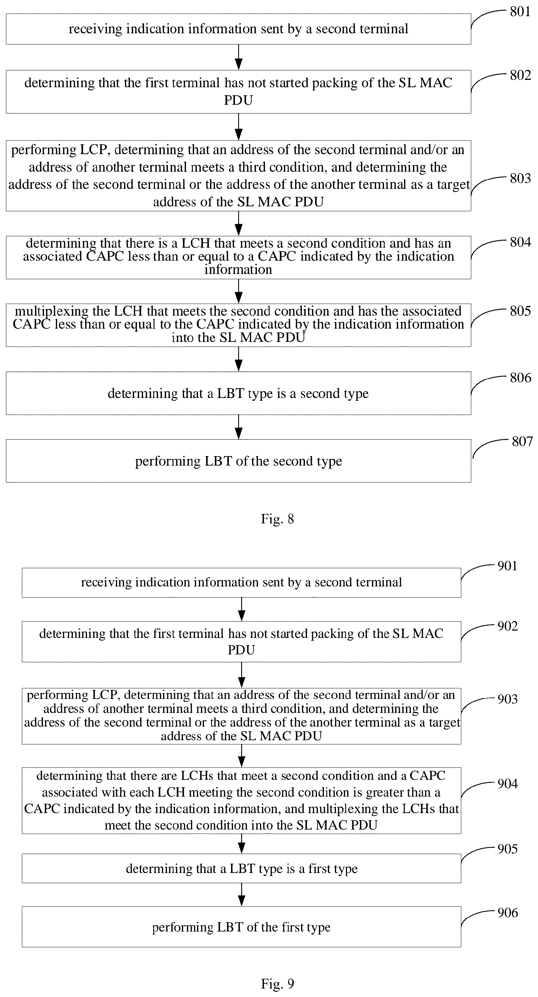

Please refer to Fig. 8, which is a schematic flowchart of another communication method for a SL in an unlicensed spectrum provided in an embodiment of the present disclosure. It should be noted that the SL is transmitted on an unlicensed spectrum, and the method can be applied to Sidelink-U scenarios. The method can be performed by the first terminal, and optionally, the first terminal can operate in either mode 1 or mode 2 for resource allocation. As shown in Fig. 8, the method may include but is not limited to the following steps.

In step 801, indication information sent by a second terminal is received.

In an embodiment of the present disclosure, the implementation of step 801 can be implemented using any of the above embodiments, which is not limited or repeated here.

In step 802, it is determined that the first terminal has not yet started packing of a SL MAC PDU.

In an embodiment of the present disclosure, the implementation of step 802 can be implemented using any of the above embodiments, which is not limited or repeated here.

In step 803, LCP is performed, to determine that an address of the second terminal and/or an address of another terminal meets a third condition and determine the address of the second terminal or the address of the another terminal as a target address of the SL MAC PDU.

Optionally, the first terminal executes the LCP process and determines during the LCP process that the address of the second terminal and/or the address of the another terminal meets the third condition, using the address of the second terminal or the address of the another terminal as the target address of the SL MAC PDU.

For the relevant description of the third condition in this embodiment of the present disclosure reference can be made to the description of the third condition in the above embodiments, which is not limited in this disclosure and will not be repeated here.

Optionally, during the LCP process, the first terminal can determine whether the second terminal and/or the another terminal can be used as the target address of the SL MAC PDU based on the third condition. If the first terminal determines that the second terminal and/or the another terminal can be used as the target address of the SL MAC PDU based on the third condition, the first terminal can use the address of the second terminal or the address of the another terminal as the target address of the SL MAC PDU.

In a possible implementation, if the first terminal determines that the address of the second terminal and the address of the another terminal meet the third condition, the first terminal can use the address of the second terminal as the target address of the SL MAC PDU. In another possible implementation, if the first terminal determines that the address of the second terminal and the address of the another terminal meet the third condition, the first terminal can use the address of the another terminal as the target address of the SL MAC PDU. In another possible implementation, if the first terminal determines that the address of the second terminal and the address of the another terminal meets the third condition, the first terminal selects one of the address of the second terminal and the address of the another terminal as the target address of the SL MAC PDU based on implementation of the first terminal.

In step 804, it is determined that there is a LCH that meets a second condition and has an associated CAPC less than or equal to a CAPC indicated by the indication information.

Optionally, during the LCP process, the first terminal uses the address of the second terminal or the address of the another terminal as the target address of the SL MAC PDU, and then can continue to determine whether there is an LCH that meets the second condition and has an associated CAPC less than or equal to the CAPC indicated by the indication information. If it is determined that there is an LCH that meets the second condition and has an associated CAPC less than or equal to the CAPC indicated by the indication information, step 805 is executed, which is to multiplex the LCH that meets the second condition and has an associated CAPC less than or equal to the CAPC indicated by the indication information into the SL MAC PDU.

In step 805, the LCH that meets the second condition and has the associated CAPC less than or equal to the CAPC indicated by the indication information is multiplexed into the SL MAC PDU.

In step 806, a LBT type is determined as a second type.

In step 807, LBT of the second type is performed.

In an embodiment of the present disclosure, the first terminal determines that it has not started packing of the SL MAC PDU before being a responding terminal of the shared COT and/or receiving the indication information, then during the LCP process, the first terminal determines that the address of the second terminal and/or the address of the another terminal meets the third condition, and determines the address of the second terminal or the address of the another terminal as the target address of the SL MAC PDU. The first terminal then continues to determine whether there is an LCH that meets the second condition and has an associated CAPC less than or equal to the CAPC indicated by the indication information. If there is an LCH that meets the second condition and has an associated CAPC less than or equal to the CAPC indicated by the indication information, the LCH is multiplexed into the SL MAC PDU and LBT of the second type is executed, which can enable the first terminal to complete channel access more quickly and effectively, improving channel access efficiency.

Please refer to Fig. 9, which is a schematic flowchart of another communication method for a SL in an unlicensed spectrum provided in an embodiment of the present disclosure. It should be noted that the SL is transmitted on an unlicensed spectrum, and the method can be applied to Sidelink-U scenarios. The method can be performed by the first terminal, and optionally, the first terminal can operate in either mode 1 or mode 2 for resource allocation. As shown in Fig. 9, the method may include but is not limited to the following steps.

In step 901, indication information sent by a second terminal is received.

In an embodiment of the present disclosure, the implementation of step 901 can be implemented using any of the above embodiments, which is not limited or repeated here.

In step 902, it is determined that the first terminal has not yet started packing of a SL MAC PDU.

In an embodiment of the present disclosure, the implementation of step 902 can be implemented using any of the above embodiments, which is not limited or repeated here.

In step 903, a LCP process is performed, and it is determined during the LCP process that an address of the second terminal and/or an address of another terminal meets a third condition, and the address of the second terminal or the address of the another terminal is determined as a target address of the SL MAC PDU.

In an embodiment of the present disclosure, the implementation of step 903 can be implemented using any of the above embodiments, which is not limited or repeated here.

In step 904, it is determined that there is a LCH that meets a second condition and a CAPC associated with the LCH meeting the second condition is greater than a CAPC indicated by the indication information, and the LCH meeting the second condition is multiplexed into the SL MAC PDU.

For the relevant description of the second condition in this embodiment of the present disclosure reference can be made to the description of the second condition in the above embodiments, which is not limited in this disclosure and will not be repeated here.

Optionally, during the LCP process, the first terminal uses the address of the second terminal or the address of the another terminal as the target address of the SL MAC PDU, and can continue to determine whether there is an LCH that meets the second condition and has an associated CAPC less than or equal to the CAPC indicated by the indication information. If it is determined that there is an LCH that meets the second condition and has an associated CAPC greater than the CAPC indicated by the indication information, the LCH will be multiplexed into the SL MAC PDU.

In step 905, a LBT type is determined as a first type.

In step 906, LBT of the first type is performed.

In an embodiment of the present disclosure, the first terminal determines that it has not started packing of the SL MAC PDU before being the responding terminal of the shared COT and/or receiving the indication information, then in the LCP process, the first terminal determines that the address of the second terminal and/or the address of the another terminal meets the third condition, and uses the address of the second terminal or the address of the another terminal as the target address of the SL MAC PDU. The first terminal continues to determine whether there is an LCH that meets the second condition and has an associated CAPC less than or equal to the CAPC indicated by the COT indication information. If all LCHs that meet the second condition have associated CAPCs greater than the CAPC indicated by the COT indication information, these LCHs that meet the second condition and have associated CAPCs greater than the CAPC indicated by the COT indication information are multiplexed into the SL MAC PDU to perform the first type of LBT, which can enable the first terminal to complete channel access more effectively.

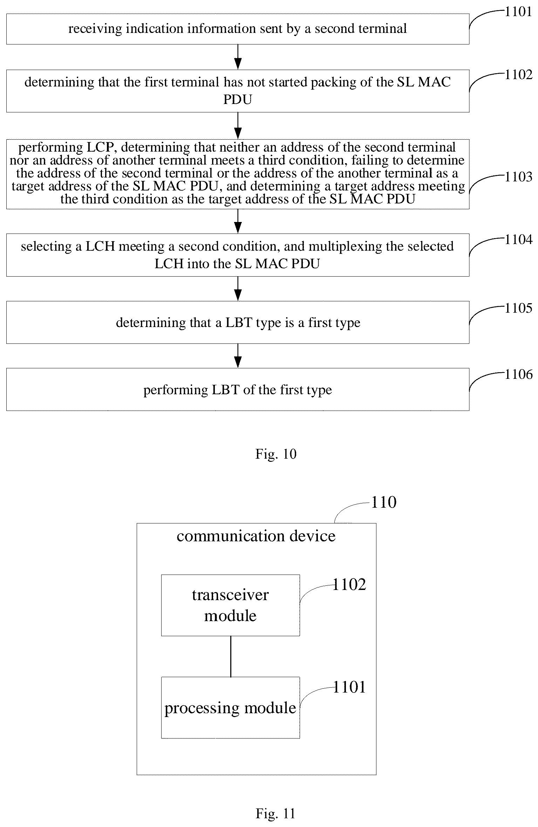

Please refer to Fig. 10, which is a schematic flowchart of another communication method for a SL in an unlicensed spectrum provided in an embodiment of the present disclosure. It should be noted that the SL is transmitted on an unlicensed spectrum, and the method can be applied to Sidelink-U scenarios. The method can be performed by the first terminal, and optionally, the first terminal can operate in either mode 1 or mode 2 for resource allocation. As shown in Fig. 10, the method may include but is not limited to the following steps.

In step 1001, indication information sent by a second terminal is received.

In an embodiment of the present disclosure, the implementation of step 1001 can be implemented using any of the above embodiments, which is not limited or repeated here.

In step 1002, it is determined that the first terminal has not yet started packing of a SL MAC PDU.

In an embodiment of the present disclosure, the implementation of step 1002 can be implemented using any of the above embodiments, which is not limited or repeated here.

In step 1003, a LCP process is performed, and it is determined during the LCP process that neither an address of the second terminal nor an address of another terminal meets a third condition, failing to use the address of the second terminal or the address of the another terminal as a target address of the SL MAC PDU, and a target address meeting the third condition is determined as the target address of the SL MAC PDU.

In an embodiment of the present disclosure, the implementation of step 1003 can be implemented using any of the above embodiments, which is not limited or repeated here.

In step 1004, a LCH meeting a second condition is selected and multiplexed into the SL MAC PDU.

In an embodiment of the present disclosure, the implementation of step 1004 can be implemented using any of the above embodiments, which is not limited or repeated here.

In step 1005, a LBT type is determined as a first type.

In step 1006, LBT of the first type is performed.

In an embodiment of the present disclosure, the first terminal determines that it has not started packing of the SL MAC PDU before being the responding terminal of the shared COT and/or receiving the indication information, then in the LCP process, the first terminal determines that neither the address of the second terminal nor the address of the another terminal meets the third condition, and the address of the second terminal or the address of the another terminal cannot be used as the target address of the SL MAC PDU. The first terminal determines the target address that meets the third condition as the target address of the SL MAC PDU. The first terminal continues to select the LCH that meets the second condition and multiplex it into the SL MAC PDU to perform the first type of LBT, which can enable the first terminal to complete channel access more effectively.

In the above embodiments provided in this disclosure, the methods provided in this disclosure are introduced from the perspective of the first terminal. In order to achieve the various functions in the methods provided in the embodiments of the present disclosure, the first terminal may include a hardware structure, software modules, or a combination of hardware structure and software modules to implement the aforementioned functions. One of the above functions can be executed in the form of hardware structure, software module, or a combination of hardware structure and software module.

Please refer to Fig. 11, which is a block diagram of a communication device 110 for a SL in an unlicensed spectrum provided in an embodiment of the present disclosure. The device 110 shown in Fig. 11 may include a processing module 1101 and a transceiver module 1102. The transceiver module 1102 may include a sending module and/or a receiving module. The sending module is configured to implement the sending function, and the receiving module is configured to implement the receiving function. The transceiver module 1102 may implement the sending function and/or the receiving function.

The device 110 may be a terminal (such as the first terminal in the aforementioned method embodiments), a device within the terminal, or a device that can be used in conjunction with the terminal.

The device 110 is a terminal (such as the first terminal in the aforementioned method embodiments): the processing module 1101 is configured to receive indication information sent by a second terminal, wherein the indication information indicates a shared channel occupancy time (COT); the processing module 1101 is further configured to determine packing state information of a SL MAC PDU of the device 110, and determine a listen before talk (LBT) type; the processing module 1101 is further configured to perform LBT according to the LBT type.

In an implementation, the indication information is carried through sidelink control information (SCI), and the processing module 1101 is further configured to: determine a target address indicated by the SCI and/or a first identifier indicated by the indication information, and determine whether the device is a responding terminal of the shared COT according to the target address indicated by the SCI and/or the first identifier indicated by the indication information, wherein the first identifier identifies the responding terminal of the shared COT.

In a possible implementation, the processing module 1101 is specifically configured to: determine that the device 110 completes packing of the SL MAC PDU, and the SL MAC PDU does not meet a condition for using the shared COT; and determine that the LBT type is a first type.

In a possible implementation, the responding terminal uses the shared COT to only send SL data to the second terminal, and the SL MAC PDU not meeting the condition for using the shared COT includes at least one of: a channel access priority class (CAPC) of the SL MAC PDU being greater than a CAPC indicated by the indication information; or a terminal receiving the SL MAC PDU being not the second terminal.

In a possible implementation, the responding terminal uses the shared COT to send SL data to the second terminal or another terminal, and the SL MAC PDU not meeting the condition for using the shared COT includes at least one of: a CAPC of the SL MAC PDUs being greater than a CAPC indicated by the indication information; or a terminal receiving the SL MAC PDU being not the second terminal or the another terminal.

In a possible implementation, the processing module 1101 is specifically configured to: determine that the device 110 completes packing of the SL MAC PDU, and the SL MAC PDU meets a condition for using the shared COT; and determine that the LBT type is a second type.

In a possible implementation, the responding terminal uses the shared COT to only send SL data to the second terminal, and SL MAC PDU meeting the condition for using the shared COT includes: a CAPC of the SL MAC PDU being less than or equal to a CAPC indicated by the indication information; and a terminal receiving the SL MAC PDU being the second terminal.

In a possible implementation, the responding terminal uses the shared COT to send SL data to the second terminal or another terminal, and the SL MAC PDU meeting the condition for using the shared COT includes: a CAPC of the SL MAC PDU being less than or equal to a CAPC indicated by the indication information; and a terminal receiving the SL MAC PDU being the second terminal or the another terminal.

In an optional implementation, the indication information includes a second identifier, the second identifier identifies the another terminal, and the another terminal is a terminal other than the device 110 and the second terminal.

In an implementation, the processing module 1101 is specifically configured to: determine that the device 110 has not started packing of the SL MAC PDU; and determine that the device 110 does not select to use the shared COT, and determine that the LBT type is the first type.

In an implementation, the processing module 1101 is specifically configured to: determine that the device 110 has not started packing of the SL MAC PDU; perform logical channel prioritization (LCP); determine that an address of the second terminal and/or an address of another terminal meets a first condition; determine that the address of the second terminal or the address of the another terminal is the target address of the SL MAC PDU; continue to select a logical channel (LCH); multiplex the LCH selected into the SL MAC PDU, wherein the LCH selected meets a second condition and has an associated CAPC less than or equal to a CAPC indicated by the indication information; and determine that the LBT type is a second type.

In an implementation, the processing module 1101 is specifically configured to: determine that the device 110 has not started packing of the SL MAC PDU; perform LCP; determine that neither an address of the second terminal nor an address of another terminal meets a first condition; fail to determine the address of the second terminal or the address of the another terminal as a target address of the SL MAC PDU, and determine the target address of the SL MAC PDU according to a third condition; continue to select a LCH meeting a second condition; multiplex selected LCH meeting the second condition into the SL MAC PDU; and determine that the LBT type is a first type.

In a possible implementation, the first condition includes at least one of:
condition a: if discontinuous reception on the sidelink (SL DRX) is applicable to the target address, sidelink grant is within an activation duration of the target address, and the sidelink grant is used to send the SL MAC PDU;
condition b: the target address has at least one LCH and/or medica access control-control element (MAC CE) that meets a first preset condition;
condition c: the target address has at least one LCH or MAC CE with a highest priority among all LCHs and MAC CEs that meet the first preset condition.

Optionally, the first preset condition includes at least one of:
having SL data to be transmitted;
if any logical channel has a token of a sidelink sending buffer (SBj), SBj>0;
if the sidelink grant is configuredGrantTypel, a parameter configuration sl-configuredGrantType1Allowed associated with the logical channel allows a media access control service data unit (MAC SDU) of the logical channel to be transmitted on the configuredGrantType1;
if a list of allowed configured grants (SL-allowedcg-list) is configured, the list includes configured grant identifiers associated with the sidelink grant;
if the sidelink grant has no associated physical sidelink feedback channel (PSFCH) resource, a hybrid automatic repeat request (HARQ) attribute of the logical channel is HARQ-disabled;
an associated CAPC being less than or equal to a CAPC indicated by the indication information.

In an implementation, the processing module 1101 is specifically configured to: determine that the device 110 has not started packing of the SL MAC PDU; perform LCP; determine that an address of the second terminal and/or an address of another terminal meets a third condition; determine that the address of the second terminal or the address of the another terminal is the target address of the SL MAC PDU; determine that there is a LCH that meets a second condition and has an associated CAPC less than or equal to a CAPC indicated by the indication information; multiplex the LCH that meets the second condition and has the associated CAPC less than or equal to the CAPC indicated by the indication information into the SL MAC PDU; and determine that the LBT type is a second type.

In an implementation, the processing module 1101 is specifically configured to: determine that the device 110 has not started packing of the SL MAC PDU; perform LCP; determine that an address of the second terminal and/or an address of another terminal meets a third condition; determine that the address of the second terminal or the address of the another terminal is the target address of the SL MAC PDU; determine that there are LCHs that meet a second condition and an associated CAPC of each LCH meeting the second condition is greater than an CAPC indicated by the indication information; multiplex the LCHs that meet the second condition into the SL MAC PDU; and determine that the LBT type is a first type.

In an implementation, the processing module 1101 is specifically configured to: determine that the device 110 has not started packing of the SL MAC PDU; perform LCP; determine that neither an address of the second terminal nor an address of another terminal meets a third condition; fail to determine the address of the second terminal or the address of the another terminal as the target address of the SL MAC PDU, and determine a target address meeting the third condition as the target address of the SL MAC PDU; continue to select a LCH meeting a second condition, and multiplexing the LCH meeting the second condition into the SL MAC PDU; and determine that the LBT type is the first type.

In an optional implementation, the third condition includes at least one of:
condition A: if SL DRX is applicable to the target address, sidelink grant is within an activation duration of the target address, and the sidelink grant is used to send the SL MAC PDU;
condition B: the target address has at least one LCH and/or MAC CE that meets a second preset condition;
condition C: the target address has at least one LCH or MAC CE with a highest priority among all LCHs and MAC CEs that meet the second preset condition.

Optionally, the second preset condition includes at least one of:
having SL data to be transmitted;
if any logical channel has SBj, SBj>0;
if the sidelink grant is configuredGrantTypel, a parameter configuration sl-configuredGrantTypel Allowed associated with the logical channel allows a MAC SDU of the logical channel to be transmitted on the configuredGrantType1;
if a list of allowed configured grants is configured, the list comprises configured grant identifiers associated with the sidelink grant;
if the sidelink grant has no associated PSFCH resource, a HARQ attribute of the logical channel is HARQ-disabled.

In an optional implementation, the LCH that meets the second condition includes selecting a logical channel from logical channels belonging to the target address that meets all of the following conditions:
1) having SL data available for transmission;
2) if a parameter sl-configuredGrantType1Allowed is configured, the parameter sl-configuredGrantType1 Allowed is set to be true when the SL grant is configuredGrantType 1;
3) if a list of SL allowed configured grants (SL-allowedcg-list) is configured, the SL-allowedcg-list needs to include configured grant indexes associated with the SL grant; and
4) sl-HARQ-FeedbackEnabled is set as follows:
   41) if PSFCH is configured for the SL grant associated with the SCI, and the terminal (UE) can receive the PSFCH:
      411) if the sl-HARQ-FeedbackEnabled corresponding to a logical channel with a highest priority that meets the condition above is enabled, the logical channel to be selected also needs to meet a condition that its sl-HARQ-FeedbackEnabled is enabled; or
      412) if the sl-HARQ-FeedbackEnabled corresponding to a logical channel with a highest priority that meets the condition above is disabled, the logical channel to be selected also needs to meet a condition that its sl-HARQ-FeedbackEnabled is disabled;
   42) if PSFCH is not configured for the SL grant associated with the SCI, and/or the UE cannot receive the PSFCH,
   421) the sl-HARQ-FeedbackEnabled is set to disabled.

Regarding the device in the above embodiments, the specific ways in which each module performs operations have been described in detail in the relevant embodiments of the method, and will not be elaborated here.

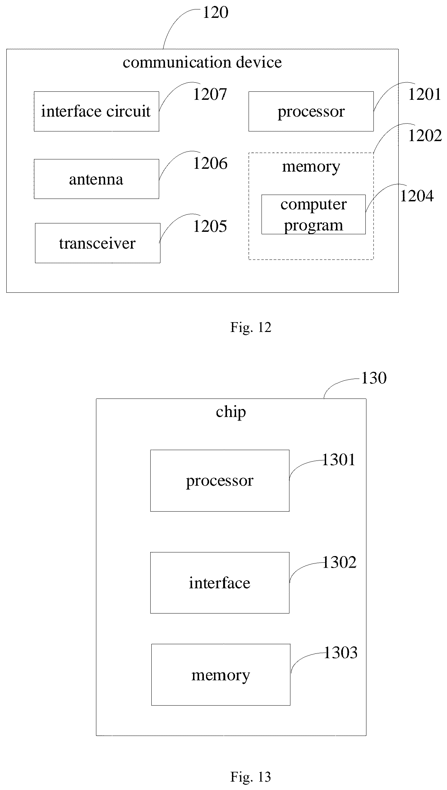

Please refer to Fig. 12, which is a block diagram of a communication device 120 provided in an embodiment of the present disclosure. The communication device 120 may be a terminal (such as the first terminal in the aforementioned method embodiments), or a chip, chip system, or processor that supports the terminal to implement the above methods. The device can be used to implement the method described in the above method embodiments. For details, please refer to the description in the above method embodiments.

The communication device 120 may include one or more processors 1201. The processor 1201 may be a general-purpose processor or a dedicated processor, etc. For example, it may be a baseband processor or a central processor. The baseband processor can be used to process communication protocols and communication data, while the central processor can be used to control communication devices (such as network side devices, baseband chips, terminals, terminal chips, DU or CU, etc.), execute computer programs, and process data from computer programs.

Optionally, the communication device 120 may also include one or more memories 1202, on which computer programs 1204 may be stored. The processor 1201 executes the computer programs 1204 to enable the communication device 120 to perform the methods described in the above method embodiments. Optionally, the memory 1202 may also store data. The communication device 120 and the memory 1202 can be set separately or integrated together.

Optionally, the communication device 120 may also include a transceiver 1205 and an antenna 1206. The transceiver 1205 can be referred to as a transceiver unit, transceiver machine, or transceiver circuit, etc., used to implement the sending and receiving function. The transceiver 1205 may include a receiver and a transmitter, where the receiver can be referred to as a receiver machine or receiving circuit, etc., used to implement the receiving function; the transmitter can be referred to as a transmitter machine or a transmission circuit, etc., used to implement the sending function.

Optionally, the communication device 120 may also include one or more interface circuits 1207. The interface circuit 1207 is configured to receive code instructions and transmit them to the processor 1201. The processor 1201 executes the code instructions to cause the communication device 120 to perform the method described in the above method embodiments.

The communication device 120 is a terminal (such as the first terminal in the aforementioned method embodiments): the processor 1201 is configured to execute steps 201, 202, and 203 in Fig. 2; execute steps 301, 302, 303, and 304 in Fig. 3; execute steps 401, 402, 403, and 404 in Fig. 4; execute steps 501, 502, 503, and 504 in Fig. 5; execute steps 601, 602, 603, 604, 605, and 606 in Fig. 6; execute steps 701, 702, 703, 704, 705, and 706 in Fig. 7; execute steps 801, 802, 803, 804, 805, 806, and 807 in Fig. 8; execute steps 901, 902, 903, 904, 905, and 906 in Fig. 9; or execute steps 1001, 1002, 1003, 1004, 1005, and 1006 in Fig. 10.

In an implementation, the processor 1201 may include a transceiver for implementing receiving and sending functions. For example, the transceiver may be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In an implementation, the processor 1201 may store a computer program, which when run on the processor 1201, enables the communication device 120 to perform the method described in the above method embodiments. The computer program may be fixed in the processor 1201, in which case the processor 1201 may be implemented by hardware.

In an implementation, the communication device 120 may include a circuit that can perform the functions of sending, receiving, or communicating as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication device described in the above embodiments may be a terminal (such as the first terminal in the aforementioned method embodiments), but the scope of the communication device described in this disclosure is not limited to this, and the structure of the communication device may not be limited by Fig. 12. The communication device may be a standalone device or a part of a larger device. For example, the communication device may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal device, intelligent terminal device, cellular phone, wireless device, handheld device, mobile unit, vehicle-mounted device, network device, cloud device, artificial intelligence device, etc;
(6) Others and so on.

For the case where the communication device may be a chip or a chip system, please refer to the block diagram of the chip shown in Fig. 13. The chip shown in Fig. 13 includes a processor 1301 and an interface 1302. The number of processors 1301 may be one or more, and the number of interfaces 1302 may be multiple.

For the case where the chip is used to implement the functions of the terminal in embodiments of the present disclosure (such as the first terminal in the aforementioned method embodiments):
the processor 1301 is configured to receive indication information sent by a second terminal, wherein the indication information indicates a shared channel occupation time (COT); the processor 1301 is further configured to determine packing state information of a SL MAC PDU of the first terminal, and determine a listen before talk (LBT) type; the processor 1301 is further configured to perform LBT according to the LBT type.

In an implementation, the indication information is carried through sidelink control information (SCI), and the processor 1301 is further configured to: determine a target address indicated by the SCI and/or a first identifier indicated by the indication information, and determine whether the first terminal is a responding terminal of the shared COT according to the target address indicated by the SCI and/or the first identifier indicated by the indication information, wherein the first identifier identifies the responding terminal of the shared COT.

In a possible implementation, the processor 1301 is specifically configured to: determine that the first terminal completes packing of the SL MAC PDU, and the SL MAC PDU does not meet a condition for using the shared COT; and determine that the LBT type is a first type.

In a possible implementation, the responding terminal uses the shared COT to only send SL data to the second terminal, and the SL MAC PDU not meeting the condition for using the shared COT includes at least one of: a channel access priority class (CAPC) of the SL MAC PDU being greater than a CAPC indicated by the indication information; or a terminal receiving the SL MAC PDU being not the second terminal.

In a possible implementation, the responding terminal uses the shared COT to send SL data to the second terminal or another terminal, and the SL MAC PDU not meeting the condition for using the shared COT includes at least one of: a CAPC of the SL MAC PDUs being greater than a CAPC indicated by the indication information; or a terminal receiving the SL MAC PDU being not the second terminal or the another terminal.

In a possible implementation, the processor 1301 is specifically configured to: determine that the first terminal completes packing of the SL MAC PDU, and the SL MAC PDU meets a condition for using the shared COT; and determine that the LBT type is a second type.

In a possible implementation, the responding terminal uses the shared COT to only send SL data to the second terminal, and SL MAC PDU meeting the condition for using the shared COT includes: a CAPC of the SL MAC PDU being less than or equal to a CAPC indicated by the indication information; and a terminal receiving the SL MAC PDU being the second terminal.

In a possible implementation, the responding terminal uses the shared COT to send SL data to the second terminal or another terminal, and the SL MAC PDU meeting the condition for using the shared COT includes: a CAPC of the SL MAC PDU being less than or equal to a CAPC indicated by the indication information; and a terminal receiving the SL MAC PDU being the second terminal or the another terminal.

In an optional implementation, the indication information includes a second identifier, the second identifier identifies the another terminal, and the another terminal is a terminal other than the first terminal and the second terminal.

In an implementation, the processor 1301 is specifically configured to: determine that the first terminal has not started packing of the SL MAC PDU; and determine that the first terminal does not select to use the shared COT, and determine that the LBT type is the first type.

In an implementation, the processor 1301 is specifically configured to: determine that the first terminal has not started packing of the SL MAC PDU; perform logical channel prioritization (LCP); determine that an address of the second terminal and/or an address of another terminal meets a first condition; determine that the address of the second terminal or the address of the another terminal is the target address of the SL MAC PDU; continue to select a logical channel (LCH); multiplex the LCH selected into the SL MAC PDU, wherein the LCH selected meets a second condition and has an associated CAPC less than or equal to a CAPC indicated by the indication information; and determine that the LBT type is a second type.

In an implementation, the processor 1301 is specifically configured to: determine that the first terminal has not started packing of the SL MAC PDU; perform LCP; determine that neither an address of the second terminal nor an address of another terminal meets a first condition; fail to determine the address of the second terminal or the address of the another terminal as a target address of the SL MAC PDU, and determine the target address of the SL MAC PDU according to a third condition; continue to select a LCH meeting a second condition; multiplex selected LCH meeting the second condition into the SL MAC PDU; and determine that the LBT type is a first type.

In a possible implementation, the first condition includes at least one of:
condition a: if discontinuous reception on the sidelink (SL DRX) is applicable to the target address, sidelink grant is within an activation duration of the target address, and the sidelink grant is used to send the SL MAC PDU;
condition b: the target address has at least one LCH and/or medica access control-control element (MAC CE) that meets a first preset condition;
condition c: the target address has at least one LCH or MAC CE with a highest priority among all LCHs and MAC CEs that meet the first preset condition.

Optionally, the first preset condition includes at least one of:
having SL data to be transmitted;
if any logical channel has a token of a sidelink sending buffer (SBj), SBj>0;
if the sidelink grant is configuredGrantTypel, a parameter configuration sl-configuredGrantType1Allowed associated with the logical channel allows a media access control service data unit (MAC SDU) of the logical channel to be transmitted on the configuredGrantType1;
if a list of allowed configured grants (SL-allowedcg-list) is configured, the list includes configured grant identifiers associated with the sidelink grant;
if the sidelink grant has no associated physical sidelink feedback channel (PSFCH) resource, a hybrid automatic repeat request (HARQ) attribute of the logical channel is HARQ-disabled;
an associated CAPC being less than or equal to a CAPC indicated by the indication information.

In an implementation, the processor 1301 is specifically configured to: determine that the first terminal has not started packing of the SL MAC PDU; perform LCP; determine that an address of the second terminal and/or an address of another terminal meets a third condition; determine that the address of the second terminal or the address of the another terminal is the target address of the SL MAC PDU; determine that there is a LCH that meets a second condition and has an associated CAPC less than or equal to a CAPC indicated by the indication information; multiplex the LCH that meets the second condition and has the associated CAPC less than or equal to the CAPC indicated by the indication information into the SL MAC PDU; and determine that the LBT type is a second type.

In an implementation, the processor 1301 is specifically configured to: determine that the first terminal has not started packing of the SL MAC PDU; perform LCP; determine that an address of the second terminal and/or an address of another terminal meets a third condition; determine that the address of the second terminal or the address of the another terminal is the target address of the SL MAC PDU; determine that there are LCHs that meet a second condition and an associated CAPC of each LCH meeting the second condition is greater than an CAPC indicated by the indication information; multiplex the LCHs that meet the second condition into the SL MAC PDU; and determine that the LBT type is a first type.

In an implementation, the processor 1301 is specifically configured to: determine that the first terminal has not started packing of the SL MAC PDU; perform LCP; determine that neither an address of the second terminal nor an address of another terminal meets a third condition; fail to determine the address of the second terminal or the address of the another terminal as the target address of the SL MAC PDU, and determine a target address meeting the third condition as the target address of the SL MAC PDU; continue to select a LCH meeting a second condition, and multiplex the LCH meeting the second condition into the SL MAC PDU; and determine that the LBT type is the first type.

In an optional implementation, the third condition includes at least one of:
condition A: if SL DRX is applicable to the target address, sidelink grant is within an activation duration of the target address, and the sidelink grant is used to send the SL MAC PDU;
condition B: the target address has at least one LCH and/or MAC CE that meets a second preset condition;
condition C: the target address has at least one LCH or MAC CE with a highest priority among all LCHs and MAC CEs that meet the second preset condition.

Optionally, the second preset condition includes at least one of:
having SL data to be transmitted;
if any logical channel has SBj, SBj>0;
if the sidelink grant is configuredGrantTypel, a parameter configuration sl-configuredGrantType1Allowed associated with the logical channel allows a MAC SDU of the logical channel to be transmitted on the configuredGrantType1;
if a list of allowed configured grants is configured, the list comprises configured grant identifiers associated with the sidelink grant;
if the sidelink grant has no associated PSFCH resource, a HARQ attribute of the logical channel is HARQ-disabled.

In an optional implementation, the LCH that meets the second condition includes selecting a logical channel from logical channels belonging to the target address that meets all of the following conditions:
1) having SL data available for transmission;
2) if a parameter sl-configuredGrantTypelAllowed is configured, the parameter sl-configuredGrantType1Allowed is set to be true when the SL grant is configuredGrantType 1;
3) if a list of SL allowed configured grants (SL-allowedcg-list) is configured, the list needs to include configured grant indexes associated with the SL grant; and
4) sl-HARQ-FeedbackEnabled is set as follows:
   A) if PSFCH is configured for the SL grant associated with the SCI, and the terminal (UE) can receive the PSFCH:
      I) if the sl-HARQ-FeedbackEnabled corresponding to a logical channel with a highest priority that meets the condition above is enabled, the logical channel to be selected also needs to meet a condition that its sl-HARQ-FeedbackEnabled is enabled; or
      II) if the sl-HARQ-FeedbackEnabled corresponding to a logical channel with a highest priority that meets the condition above is disabled, the logical channel to be selected also needs to meet a condition that its sl-HARQ-FeedbackEnabled is disabled;
   B) if PSFCH is not configured for the SL grant associated with the SCI, and/or the UE cannot receive the PSFCH,
   the sl-HARQ-FeedbackEnabled is set to disabled.

Optionally, the chip also includes a memory 1303, which is used to store necessary computer programs and data.

Technicians in this field can also understand that various illustrative logical blocks and steps listed in the embodiments of the present disclosure can be implemented through electronic hardware, computer software, or a combination of both. Whether such functionality is implemented through hardware or software depends on the specific application and the design requirements of the entire system. Technicians in this field can use various methods to implement the described functions for each specific application, but such implementation should not be understood as exceeding the scope of protection of the disclosed embodiments.

The present disclosure also provides a readable storage medium storing instructions that, when executed by a computer, implement the functions of any of the method embodiments described above.

The present disclosure also provides a computer program product that, when executed by a computer, implements the functions of any of the method embodiments described above.

In the above embodiments, it can be fully or partially implemented through software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this disclosure are only for the convenience of description and are not intended to limit the scope of the disclosed embodiments, but also indicate the order of occurrence.

"At least one" in the present disclosure can also be described as one or more, and "multiple" \can be two, three, four, or more, without limitation in this disclosure. In embodiments of the present disclosure, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

The correspondence relationships shown in each table in this disclosure can be configured or predefined. The values of the information in each table are only examples and can be configured as other values, which are not limited by this disclosure. When configuring the correspondence between information and various parameters, it is not necessarily required to configure all the correspondence relationships shown in each table. For example, in the table disclosed herein, the correspondence relationships shown in certain rows may not be configured. For another example, appropriate deformation adjustments can be made based on the above table, such as splitting, merging, and so on. The names of the parameters shown in titles in the above tables can also be other names that the communication device can understand, and the values or representations of the parameters can also be other values or representations that the communication device can understand. The above tables can also be implemented using other data structures, such as arrays, queues, containers, stacks, linear tables, pointers, linked lists, trees, graphs, structures, classes, heaps, hash tables, etc.

The predefined in this disclosure can be understood as defined, defined in advance, stored, pre-stored, pre-negotiated, pre-configured, solidified, or pre-fired.

Ordinary technical personnel in this field can realize that the units and algorithm steps described in combination with the embodiments disclosed in this article can be implemented using electronic hardware, or a combination of computer software and electronic hardware. Whether these functions are executed in hardware or software depends on the specific application and design constraints of the technical solution. Professional technicians can use different methods to achieve the described functionality for each specific application, but such implementation should not be considered beyond the scope of this disclosure.

Technicians in the relevant field can clearly understand that, for the convenience and simplicity of description, for the specific working processes of the systems, devices, and units described above reference can be made to the corresponding processes in the aforementioned method embodiments, which will not be repeated here.

The above is only a specific implementation of the present disclosure, but the scope of protection of the present disclosure is not limited to this. Any skilled person familiar with the technical field can easily think of changes or replacements within the technical scope disclosed in the present disclosure, which should be included in the scope of protection of the present disclosure. Therefore, the scope of protection of this disclosure should be based on the scope of protection of the claims.

## Claims

1. A communication method for a sidelink (SL) in an unlicensed spectrum, performed by a first terminal, comprising:
receiving indication information sent by a second terminal, wherein the indication information indicates a shared channel occupation time (COT);
determining packing state information of a SL media access control (MAC) protocol data unit (PDU) of the first terminal;
determining a listen before talk (LBT) type; and
performing LBT according to the LBT type.

2. The method of claim 1, wherein the indication information is carried through sidelink control information (SCI), and the method further comprises:
determining a target address indicated by the SCI and/or a first terminal identifier indicated by the indication information, wherein the first identifier identifies a responding terminal of the shared COT; and
determining whether the first terminal is the responding terminal of the shared COT according to the target address indicated by the SCI and/or the first terminal identifier indicated by the indication information.

3. The method of claim 2, wherein determining the packing state information of the SL MAC PDU of the first terminal and determining the LBT type comprises:
determining that the first terminal completes packing of the SL MAC PDU;
determining that a condition for using the shared COT is not met; and
determining that the LBT type is a first type.

4. The method of claim 3, wherein the responding terminal uses the shared COT to only send SL data to the second terminal, and determining that the condition for using the shared COT is not met comprises at least one of:
a channel access priority class (CAPC) of the SL MAC PDU being greater than a CAPC indicated by the indication information; or
a terminal receiving the SL MAC PDU being not the second terminal.

5. The method of claim 3, wherein the responding terminal uses the shared COT to send SL data to the second terminal or another terminal, and determining that the condition for using the shared COT is not met comprises at least one of:
a CAPC of the SL MAC PDUs being greater than a CAPC indicated by the indication information; or
a terminal receiving the SL MAC PDU being not the second terminal or the another terminal.

6. The method of claim 2, wherein determining the packing state information of the SL MAC PDU of the first terminal and determining the LBT type comprises:
determining that the first terminal completes packing of the SL MAC PDU;
determining that a condition for using the shared COT is met; and
determining that the LBT type is a second type.

7. The method of claim 6, wherein the responding terminal uses the shared COT to only send SL data to the second terminal, and determining that the condition for using the shared COT is met comprises:
a CAPC of the SL MAC PDU being less than or equal to a CAPC indicated by the indication information; and
a terminal receiving the SL MAC PDU being the second terminal.

8. The method of claim 6, wherein the responding terminal uses the shared COT to send SL data to the second terminal or another terminal, and determining that the condition for using the shared COT is met comprises:
a CAPC of the SL MAC PDU being less than or equal to a CAPC indicated by the indication information; and
a terminal receiving the SL MAC PDU being the second terminal or the another terminal.

9. The method of claim 5 or 8, wherein the indication information comprises a second identifier, the second identifier identifies the another terminal, and the another terminal is a terminal other than the first terminal and the second terminal.

10. The method of claim 2, wherein determining the packing state information of the SL MAC PDU of the first terminal and determining the LBT type comprises:
determining that the first terminal has not started packing of the SL MAC PDU; and
determining that the first terminal does not select to use the shared COT, and determining that the LBT type is the first type.

11. The method of claim 2, wherein determining the packing state information of the SL MAC PDU of the first terminal and determining the LBT type comprises:
determining that the first terminal has not started packing of the SL MAC PDU;
performing logical channel prioritization (LCP);
determining that an address of the second terminal and/or an address of another terminal meets a first condition;
determining that the address of the second terminal or the address of the another terminal is the target address of the SL MAC PDU;
selecting a logical channel (LCH);
multiplexing the LCH selected into the SL MAC PDU, wherein the LCH selected meets a second condition and has an associated CAPC less than or equal to a CAPC indicated by the indication information; and
determining that the LBT type is a second type.

12. The method of claim 2, wherein determining the packing state information of the SL MAC PDU of the first terminal and determining the LBT type comprises:
determining that the first terminal has not started packing of the SL MAC PDU;
performing LCP;
determining that neither an address of the second terminal nor an address of another terminal meets a first condition;
failing to determine the address of the second terminal or the address of the another terminal as a target address of the SL MAC PDU, and determining the target address of the SL MAC PDU according to a third condition;
selecting a LCH meeting a second condition;
multiplexing selected LCH meeting the second condition into the SL MAC PDU; and
determining that the LBT type is a first type.

13. The method of claim 11 or 12, wherein the first condition comprises at least one of:
condition a: if discontinuous reception on the sidelink (SL DRX) is applicable to the target address, sidelink grant is within an activation duration of the target address, and the sidelink grant is used to send the SL MAC PDU;
condition b: the target address has at least one LCH and/or medica access control-control element (MAC CE) that meets a first preset condition;
condition c: the target address has at least one LCH or MAC CE with a highest priority among all LCHs and MAC CEs that meet the first preset condition.

14. The method of claim 13, wherein the first preset condition comprises at least one of:
having SL data to be transmitted;
if any logical channel has a token of a sidelink sending buffer (SBj), SBj>0;
if the sidelink grant is configuredGrantType1, a parameter configuration sl-configuredGrantType1Allowed associated with the logical channel allows a media access control service data unit (MAC SDU) of the logical channel to be transmitted on the configuredGrantType 1;
if a list of allowed configured grants is configured, the list comprises configured grant identifiers associated with the sidelink grant;
if the sidelink grant has no associated physical sidelink feedback channel (PSFCH) resource, a hybrid automatic repeat request (HARQ) attribute of the logical channel is HARQ-disabled;
an associated CAPC being less than or equal to a CAPC indicated by the indication information.

15. The method of claim 2, wherein determining the packing state information of the SL MAC PDU of the first terminal and determining the LBT type comprises:
determining that the first terminal has not started packing of the SL MAC PDU;
performing LCP;
determining that an address of the second terminal and/or an address of another terminal meets a third condition;
determining that the address of the second terminal or the address of the another terminal is the target address of the SL MAC PDU;
determining that there is a LCH that meets a second condition and has an associated CAPC less than or equal to a CAPC indicated by the indication information;
multiplexing the LCH that meets the second condition and has the associated CAPC less than or equal to the CAPC indicated by the indication information into the SL MAC PDU; and
determining that the LBT type is a second type.

16. The method of claim 2, wherein determining the packing state information of the SL MAC PDU of the first terminal and determining the LBT type comprises:
determining that the first terminal has not started packing of the SL MAC PDU;
performing LCP;
determining that an address of the second terminal and/or an address of another terminal meets a third condition;
determining that the address of the second terminal or the address of the another terminal is the target address of the SL MAC PDU;
determining that there are LCHs that meet a second condition and an associated CAPC of each LCH meeting the second condition is greater than an CAPC indicated by the indication information;
multiplexing the LCHs that meet the second condition into the SL MAC PDU; and
determining that the LBT type is a first type.

17. The method of claim 2, wherein determining the packing state information of the SL MAC PDU of the first terminal and determining the LBT type comprises:
determining that the first terminal has not started packing of the SL MAC PDU;
performing LCP;
determining that neither an address of the second terminal nor an address of another terminal meets a third condition;
failing to determine the address of the second terminal or the address of the another terminal as the target address of the SL MAC PDU, and determining a target address meeting the third condition as the target address of the SL MAC PDU;
continuing to select a LCH meeting a second condition, and multiplexing the LCH meeting the second condition into the SL MAC PDU; and
determining that the LBT type is the first type.

18. The method of any of claims 12 and 15-17, wherein the third condition comprises at least one of:
condition A: if SL DRX is applicable to the target address, sidelink grant is within an activation duration of the target address, and the sidelink grant is used to send the SL MAC PDU;
condition B: the target address has at least one LCH and/or MAC CE that meets a second preset condition;
condition C: the target address has at least one LCH or MAC CE with a highest priority among all LCHs and MAC CEs that meet the second preset condition.

19. The method of claim 18, wherein the second preset condition comprises at least one of:
having SL data to be transmitted;
if any logical channel has SBj, SBj>0;
if the sidelink grant is configuredGrantType1, a parameter configuration sl-configuredGrantTypelAllowed associated with the logical channel allows a MAC SDU of the logical channel to be transmitted on the configuredGrantType1;
if a list of allowed configured grants is configured, the list comprises configured grant identifiers associated with the sidelink grant;
if the sidelink grant has no associated PSFCH resource, a HARQ attribute of the logical channel is HARQ-disabled.

20. The method of any of claims 11, 12 and 15-17, wherein the LCH that meets the second condition comprises selecting a logical channel from logical channels belonging to the target address that meets all of the following conditions:
1) having SL data available for transmission;
2) if a parameter sl-configuredGrantType1Allowed is configured, the parameter sl-configuredGrantTypelAllowed is set to be true when the SL grant is configuredGrantType 1;
3) if a list of SL allowed configured grants is configured, the list needs to comprise configured grant indexes associated with the SL grant; and
4) sl-HARQ-FeedbackEnabled is set as follows:
A) if PSFCH is configured for the SL grant associated with the SCI, and the terminal (UE) can receive the PSFCH:
I) if the sl-HARQ-FeedbackEnabled corresponding to a logical channel with a highest priority that meets the condition above is enabled, the logical channel to be selected also needs to meet a condition that its sl-HARQ-FeedbackEnabled is enabled; or
II) if the sl-HARQ-FeedbackEnabled corresponding to a logical channel with a highest priority that meets the condition above is disabled, the logical channel to be selected also needs to meet a condition that its sl-HARQ-FeedbackEnabled is disabled;
B) if PSFCH is not configured for the SL grant associated with the SCI, and/or the UE cannot receive the PSFCH,
the sl-HARQ-FeedbackEnabled is set to disabled.

21. A communication device for a sidelink (SL) in an unlicensed spectrum, comprising:
a processing module, configured to receive indication information sent by a second terminal, wherein the indication information indicates a shared channel occupation time (COT);
wherein the processing module is further configured to determine packing state information of a SL media access control (MAC) protocol data unit (PDU) of the device;
wherein the processing module is further configured to determine a listen before talk (LBT) type; and
wherein the processing module is further configured to perform LBT according to the LBT type.

22. A communication device, comprising a processor and a memory, wherein the memory stores a computer program, and the processor is configured to execute the computer program stored in the memory, so as to cause the device to implement the method of any of claims 1-20.

23. A computer readable storage medium, configured to store instructions which, when executed, cause the method of any of claims 1-20 to be implemented.
